# EUROPÄISCHE PATENTSCHRIFT

(11) **EP 3 660 085 B1**
(45) Veröffentlichungstag und Bekanntmachung des Hinweises auf die Patenterteilung: **01.07.2026**
(21) Anmeldenummer: 18209276.7
(22) Anmeldetag: 29.11.2018
(51) Int. Cl.: C08K 3/04, C08K 5/3465

(54) **STÜTZMATERIAL FÜR DEN ENERGIEIMPULS-INDUZIERTEN TRANSFERDRUCK**
SUPPORT MATERIAL FOR ENERGY IMPULSE-INDUCED TRANSFER PRINTING
MATÉRIAU SUPPORT POUR L'IMPRESSION PAR TRANSFERT INDUIT PAR IMPULSION ÉNERGÉTIQUE

(43) Veröffentlichungstag der Anmeldung: 03.06.2020
(73) Patentinhaber: Ivoclar Vivadent AG, 9494 Schaan (LI); IO Tech Group, Ltd., London W10 6AZ (GB)
(72) Erfinder: BONDERER, Lorenz Josef, 7320 Sargans (CH); LAUBERSHEIMER, Jürgen Rudolf, 9470 Buchs (CH); WACHTER, Wolfgang Josef, 9494 Schaan (LI); ZENOU, Michael, 7312700 Hasmonaim (IL)
(74) Vertreter: Uexküll & Stolberg

(56) Entgegenhaltungen:
- WO-A1-02/092674
- WO-A1-2011/154747
- US-A1- 2002 197 401

## Beschreibung

Die Erfindung betrifft Verfahren zur Herstellung dreidimensionaler Objekte durch Energieimpuls-induzierten Transferdruck unter Verwendung eines Stützmaterials. Die Verfahren eigenen sich besonders zur Herstellung von Dentalrestaurationen.

Unter dem Begriff Additive Manufacturing AM werden generative Fertigungsverfahren zusammengefasst, bei denen aus computergestützten Konstruktionsdaten (CAD-Daten) dreidimensionale Modelle oder Bauteile hergestellt werden. Bekannte AM-Verfahren sind z.B. Stereolithographie (SL), selektives Lasersintern (SLS), 3D-Drucken, Fused Deposition Modelling (FDM), Inkjet-Printing (IJP), 3D-Plotting, Multi-Jet Modelling (MJM), Solid Free Form Fabrication (SFF), Laminated Object Manufacturing (LOM), Laser Powder Forming (LPF) und Direct Ceramic Jet-Printing (DCJP). Mit diesen Verfahren lassen sich Modelle, Bau- und Formteile auch in Kleinserie kostengünstig herstellen.

Die EP 1 268 211 B1 offenbart ein Druckverfahren, bei dem durch einen fokussierten Laserstrahl lokal eine Volumen- oder Positionsänderung in dem zu verdruckenden Material induziert wird, so dass sich ein Farbtröpfchen von der im wesentlichen homogenen Farbschicht ablöst und auf den Bedruckstoff übertragen wird. Dieses Verfahren wird als Laser Induced Forward Transfer (LIFT) Verfahren bezeichnet. Das zu verdruckende Material wird von dem sogenannten Donor oder Trägersubstrat auf das Empfängersubstrat (Akzeptor) übertragen. Das Trägersubstrat besteht aus einem Träger, der mit einer dünnen Schicht des zu verdruckenden Materials beschichtet ist. Diese Materialschicht wird mit einem Laser punktförmig bestrahlt und dabei erweicht oder geschmolzen und teilweise verdampft. Bei transparenten Trägern kann der Laser von der Rückseite durch den Träger hindurch auf das zu verdruckende Material fokussiert werden. Ist der Träger nicht transparent, wird der Träger durch den Laser erhitzt und das Material indirekt erweicht oder geschmolzen. Alternativ kann der Laser von oben direkt auf das Material gerichtet werden. Das Empfängersubstrat (Bedruckstoff) ist in einem geringen, genau einzuhaltenden Abstand zum Trägersubstrat angeordnet. Durch die Laserenergie wird ein Teil des zu verdruckenden Materials schlagartig verdampft. Die sich bildende Dampfwolke reisst eine kleine Menge des erweichten oder geschmolzenen Materials mit und scheidet es auf dem Empfängersubstrat ab.

Um das zu verdruckende Material zu verdampfen, muss das Laser-licht absorbiert und in Wärme umgewandelt werden. Bei Druckfarben wird der Laserstrahl in der Regel durch Farbpigmente absorbiert, die in den Farben enthalten sind. Alternativ kann eine Absorptionsschicht vorgesehen sein, die das Laserlicht absorbiert und die Energie dann an das zu verdruckende Material überträgt. Eine solche Absorptionsschicht ist üblicherweise zwischen dem Träger und dem zu verdruckenden Material angeordnet. Absorptionsschichten sind nachteilig, weil häufig Teile dieser Schicht zusammen mit der Druckfarbe auf das Empfängersubstrat übertragen werden.

Zenou et al., small 2015, 11, Nr. 33, 4082-4089 beschreiben die Herstellung dreidimensionaler Metallobjekte durch das LIFT-Verfahren. Hierzu setzen sie metallbeschichtete Glasplatten als Trägersubstrat ein. Das Metall wird durch einen Laser geschmolzen und tröpfchenweise auf das Empfängersubstrat übertragen. Durch das Drucken vieler Schichten übereinander werden dreidimensionale Metallstrukturen erhalten.

Ein Problem bei der Herstellung dreidimensionaler Strukturen ist das Drucken von freitragenden Strukturen oder Hinterschnitten, weil das zu verdruckende Material nur auf ein festes Substrat gedruckt werden kann. In solchen Fällen ist die Verwendung von sogenannten Stützmaterialien üblich, mit denen der Bereich des späteren Überhangs gedruckt wird. Nach der Fertigstellung der Struktur wird das Stützmaterial aus dem gedruckten Körper entfernt. Zenou et al. verwenden silberhaltige Kupferlegierungen als Stützmaterial, die sich chemisch aus dem durch Kupfer gebildeten Körper herauslösen lassen.

Bei dem Polyjet-Verfahren bzw. 3D-Inkjet Printing ist aufgrund des selektiven Auftragens von Materialtropfen eine ähnliche Aufgabe zu lösen. Die US 9,138,981 B1 offenbart Stützmaterialien für das 3D-Inkjet Printing, die ein Glykolpolymer, ein polare Substanz mit geringem Molekulargewicht und ein Tensid enthalten. Als Glykolpolymer werden u.a. Polyethylenglykole eingesetzt. Bevorzugte polare Substanzen sind Di- oder Polyole wie 1,8-Octandiol. Die Materialien weisen vorzugsweise eine Oberflächenspannung von 27-33 mN/m auf. Die Oberflächenspannung wird durch die Zugabe des Tensids eingestellt. Die Materialien werden zum Verdrucken erhitzt und weisen bei 80°C eine Viskosität von 10-20 cPs auf. Nach Beendigung des Druckvorgangs werden die Stützmaterialien mit Wasser von dem gedruckten Körper abgelöst.

Die US 8,460,451 B1 offenbart Stützmaterialien für den 3D-Druck, die eine Wachskomponente und eine Komponente zum Einstellen der Viskosität enthalten. Die Wachskomponente enthält eine Mischung eines Fettalkohols und eines ethoxylierten Fettalkohols. Die Einstellung der Viskosität erfolgt vorzugsweise ebenfalls durch ethoxylierte Fettalkohole. Als weitere Komponente können die Stützmaterialien ein sogenanntes Phasenänderungsmittel (phase change agent) enthalten, das die Verfestigung des Stützmaterials nach dem Verdrucken beschleunigen soll. Bevorzugte Phasenänderungsmittel sind Urethanwachse. Die Materialien haben vorzugsweise eine Viskosität von 9-14 cPs bei 65°C.

Die US 7,176,253 offenbart Stützmaterialien für Inkjet-Verfahren, die mindestens einen Fettalkohol mit einem Schmelzpunkt von 50-65°C und einem Erstarrungspunkt von 45-55°C und einen Harzester enthalten. Die Materialien haben bei 80°C eine Viskosität von 10-19 cPs.

US 2002/0197401 A1 und WO 02/092674 A1 offenbaren ein Verfahren zur Herstellung elektronischer Bauteile durch Beschichten von Substraten mit einer rheologischen Flüssigkeit mittels eines LIFT-Verfahrens. Hierzu wird das zu verdruckende Material auf einen lasertransparenten Träger aufgebracht und durch Laserbestrahlung auf ein Empfängersubstrat übertragen. Als Trägermaterial eignen sich beispielsweise Quarz- und Glasplatten.

Die WO 2011/154747 A1 beschreibt die Herstellung elektrischer Bauteile durch Beschichten eines Substrats. Hierzu werden Glas- oder Quarzscheiben als Träger mit dem zu verdruckenden Material beschichtet. Das Material wird anschließend durch den Träger hindurch mit einem Laser bestrahlt und dabei vom Träger auf das Empfängersubstrat übertragen. Als Empfängersubstrate werden Metallfolien, Papier, Pappe sowie Textilien und Kunststoffe genannt.

Nicht-metallische Stützmaterialien für das LIFT-Verfahren sind aus dem Stand der Technik nicht bekannt.

Der Erfindung liegt die Aufgabe zugrunde, die genannten Nachteile zu vermeiden. Insbesondere liegt der Erfindung die Aufgabe zugrunde, ein Verfahren zur Herstellung dreidimensionaler Objekte nach dem LIFT Prinzip zur Verfügung zu stellen, mit dem sich Strukturen mit Überhängen und/oder Hinterschnitten herstellen lassen. Das Verfahren soll sich insbesondere zur Herstellung von Dentalrestaurationen eignen.

Zudem sollen unterschiedliche Materialien gemeinsam zu einem Objekt verarbeitet werden können. Die Stützmaterialien müssen daher mit einer Vielzahl von unterschiedlichen zu verdruckenden Materialien harmonieren.

Diese Aufgabe wird erfindungsgemäß durch ein Verfahren nach Anspruch 1 gelöst, das die Verwendung mindestens eines Stützmaterials vorsieht, das
(a) 0,05 bis 30 Gew.-% mindestens eines anorganischen oder organischen Farbstoffs und/oder Pigments als Energietransformationskomponente,
(b) 5 bis 60 Gew.-% mindestens eines Stoffs mit einem Siedepunkt von 80 bis 280°C als Volumenausdehnungskomponente und
(c) 35 bis 94,95 Gew.-% mindestens eines Polymers, Wachses und/oder nichtionischen Tensids, das bei < 40°C fest ist, als Bindemittel enthält.

Das Bindemittel bewerkstelligt primär die Stützfunktion.

Das Verfahren zur Herstellung dreidimensionaler Objekte umfasst die folgenden Schritte:
(1) Flächiges Aufbringen eines Stütz-/Baumaterials auf einen Träger in definierter Schichtdicke, vorzugsweise in einer Schichtdicke von 3 - 300 µm, besonders bevorzugt 10 - 100 µm,
(2) Transfer eines Anteils des Stütz-/Baumaterials vom Trägersubstrat (Donor) auf ein Empfängersubstrat (Akzeptor) durch den lokalen, ortsselektiven Eintrag eines Energieimpulses, vorzugsweise eines Laserimpulses,
(3) Verfestigen des Stütz-/Baumaterials auf dem Empfängersubstrat, vorzugsweise durch Trocknen, Strahlenhärtung oder Ändern des Aggregatszustandes (z.B. durch Temperaturänderung),
(4) Wiederholen der Schritte (1)-(3) bis das gewünschte Objekt erstellt ist,
(5) Entfernen des Stützmaterials und optionales Reinigen des Objekts,
(6) optionales Nachvergüten des Objekts durch weiteres Härten, vorzugsweise durch Trocknung, Strahlung, Wärme oder eine Kombination davon,
(7) ggf. Entbindern und/oder Sintern des Objekts,
(8) optionale mechanische Bearbeitung des Objekts, z.B. durch Trowalisieren oder manuelles Bearbeiten wie Schleifen und/der Polieren.

Die Schritte (1) bis (3) werden so oft wiederholt, bis das gewünschte Objekt fertiggestellt ist. Gemäß einer bevorzugten Ausführungsform wird das Stütz-/Baumaterial im Anschluss an Schritt (3) geglättet, vorzugsweise mit einer Walze, Klinge, Fräse und/oder einem Abstreifer. Anschließend wird das Objekt in den Schritten (5) bis (8) weiterverarbeitet, wobei die Schritte (6) bis (8) optional sind.

Das Stützmaterial wird aus dem fertigen Objekt entfernt. Dies kann entweder in einem separaten Verfahrensschritt (5) oder während des Entbinderns oder Sinterns in Schritt (7) erfolgen.

In Schritt (6) werden ggf. vorhandene ungehärtete Anteile des Bindemittels gehärtet, vorzugsweise durch Bestrahlung mit Licht, besonders bevorzugt mit sichtbarem oder UV-Licht. Diese Form der Nachbehandlung kommt insbesondere dann in Betracht, wenn das Bindemittel in Schritt (3) durch Bestrahlung mit Licht, vorzugsweise mit sichtbarem oder UV-Licht, gehärtete wird.

Schritt (7) wird insbesondere zur Herstellung von Objekten aus Keramik oder Glaskeramik durchgeführt. In diesem Fall wird in Schritt (5) bzw. Schritt (6) ein Grünkörper erhalten, der durch Entbindern und Sintern in ein keramisches Objekt überführt wird. Da verschiedene Verfahrensschritte optional sind, kann die tatsächliche Anzahl der Verfahrensschritte und damit die Nummerierung der einzelnen Schritte variieren.

In dem Verfahren können ein oder mehrere unterschiedliche Stützmaterialien und/oder ein oder mehrere unterschiedliche Baumaterialien eingesetzt werden.

Bevorzugte Träger in **Schritt (1)** sind Polymerfolien, bevorzugt mit einer Dicke von 10 - 200 µm, insbesondere PET-, Polyimid-, und Polyvinylchlorid (PVC)-folien; Glasträger, vorzugsweise aus Floatglas oder Borosilikatglas; Träger aus nicht-metallischen, anorganischen, porösen oder nicht-porösen Werkstoffen; metallische Träger, vorzugsweise aus Edelstahl, Aluminium, Titanlegierungen, Kupferlegierungen wie Bronze oder Messing; Träger aus nicht-metallischen, anorganischen Werkstoffen wie keramische Träger, vorzugsweise aus ZrO₂, Al₂O₃, Zirconia toughened Alumina (ZTA), Alumina toughened Zirconia (ATZ), SiCₓ, SiNₓ, Diamond like carbon, Glassy Carbon, BN, B₄C oder AlN; oder Träger aus einer Kombinationen dieser Materialien. Die Träger werden so gewählt, dass sie sich gegenüber dem Stütz-/Baumaterial ausreichend inert verhalten, d.h. insbesondere nicht innerhalb der Anwendungszeit merklich vom Stütz- oder Baumaterial gequollen oder angegriffen werden.

Der Träger kann als Platte, Einwegband, Endlosband, Zylinder oder Hohlzylinder vorliegen. Die Arbeitsfläche kann eben oder gewölbt sein. Gewölbte Flächen sind bevorzugt um eine Achse gewölbt, wie z.B. die Mantelfläche eines Zylinders.

Das Stütz-/Baumaterial kann auf bekannte Weise auf den Träger aufgebracht werden, vorzugsweise durch Rakel- oder Doktorbladesysteme, mit Schlitzdüsen (mit oder ohne Dispenser), durch Flexo-, oder Gravurdruck, Siebdruck, Tampondruck, Sprühbeschichtung oder durch eine Kombination dieser Verfahren. Generell sind hierzu alle im Stand der Technik bekannten Druckmethoden geeignet. Der beschichtete Träger wird hierin auch als Trägersubstrat bezeichnet.

Im Fall von Druckzylindern wird das Stütz-/Baumaterial vorzugweise kontinuierlich auf einen rotierenden Zylinder aufgetragen. Durch die Rotation wird die auf dem Zylinder gebildete Schicht des Materials in Richtung der Energiequelle, z.B. des Lasers, transportiert und dort verdruckt. Anschließend wird das verdruckte Material bei weiterer Rotation wieder ergänzt.

Trägerfolien können ebenfalls in kontinuierlichen Verfahren eingesetzt werden, beispielsweise indem sie als umlaufendes Band ausgebildet werden. Die beschichteten Folien können aber auch für die einmalige Verwendung konfektioniert sein.

In **Schritt (2)** wird ein Teil der eingebrachten Energie durch das Stütz-/Baumaterial absorbiert und in Wärme umgewandelt. Die Absorption findet vorzugsweise ohne eine zusätzliche Absorptionsschicht auf dem Trägersubstrat im Stütz-/Baumaterial selbst statt, so dass die mit derartigen Absorptionsschichten verbundenen Nachteile vermieden werden.

Die Energieabsorption bewirkt eine lokale, schlagartige Volumenausdehnung, beispielsweise eine Verdampfung, der Volumenausdehnungskomponente im Material und führt zum Ablösen des Stütz-/Baumaterials vom Trägersubstrat und zum Transfer auf das Empfängersubstrat. Dabei werden Tropfen des Stütz-/Baumaterials auf das Empfängersubstrat übertragen, wo sie koaleszieren können und beispielsweise einen homogenen Film bilden.

Der Energieeintrag in Schritt (2) erfolgt vorzugsweise über die dem Stütz-/Baumaterial abgewandte Seite des Trägersubstrats.

Das Empfängersubstrat kann eine plane Oberfläche aufweisen und sollte mindestens so groß sein, dass es das zu druckende Bauteil in Gänze aufnehmen kann. Das Empfängersubstrat hat vorzugsweise eine glatte Oberfläche, die geschlossen oder porös sein kann. Unter einer porösen Oberfläche wird eine Oberfläche verstanden, die Poren mit einer mittleren Größe von vorzugsweise 1 nm - bis 10 µm aufweist. Die Porengröße wird rasterelektronenmikroskopisch durch Auszählen bestimmt. Angegeben sind die dabei erhaltenen Mittelwerte.

Beispielhafte Materialien mit mikro- oder nanoporöser Oberfläche sind abgebundener, trockener Gips und angesintertes aber noch poröses ZrO₂, nanoporöses Glas oder mikroporöse Kunststoffe, wie z.B. zusammengesintertes Polyethylen hoher Dichte.

Durch die Verwendung von porösen Empfängersubstraten kann das Trocknen der Stütz- und Baumaterialien begünstigt werden, besonders von solchen Baumaterialien, die feste Partikel enthalten, wie Schlicker für die Herstellung von keramischen Objekten. Besonders dann, wenn das Verfestigen durch Trocknen stattfindet, kann ein separater Trocknungsschritt entfallen. Es ist jedoch darauf zu achten, dass die Poren kleiner als die festen Füllstoffpartikel sind, damit diese nicht beim Trocknen die Poren verstopfen.

Unter Stützmaterialien werden Materialen verstanden, die aus dem fertigen Objekt entfernt werden. Baumaterialien sind demgegenüber Materialien, die das Objekt bilden und die nach dem Entfernen des Stützmaterials zurück bleiben. Der Begriff "Stütz-/Baumaterial" ist so zu verstehen, dass entweder ein Stützmaterial oder ein Baumaterial verdruckt wird oder dass beide Materialien zusammen verwendet werden. Stütz- und Baumaterialen gemeinsam werden hierin auch als Druckmaterialien bezeichnet.

Die gewünschten dreidimensionalen Objekte werden durch wiederholtes schichtweises Verdrucken von Stütz- und Baumaterial hergestellt. Die einzelnen Schichten können jeweils allein durch das Stützmaterial, allein durch das Baumaterial oder durch beide Materialien gemeinsam gebildet werden.

Durchgehende Schichten, die ausschließlich durch das Stützmaterial gebildete werden, sind naturgemäß so angeordnet, dass sie außerhalb des fertigen Objekts liegen, d.h. beispielsweis oberhalb oder unterhalb des Objekts.

Stütz- und Baumaterial können in einem Arbeitsgang gemeinsam oder nacheinander verdruckt werden. Beispielswese kann in einem ersten Arbeitsgang ein Stützmaterial verdruckt und dann in oder auf die verfestigte Stützstruktur auf die beschriebene Weise das Baumaterial gedruckt werden. Dabei können die abgeschiedenen Schichtstärken des Stützmaterials und des Baumaterials unterschiedlich sein. Dadurch kann es z.B. notwendig werden, dass die Anzahl abgeschiedener Schichten für Stütz- und Baumaterial unterschiedlich sind. Gemäß einer bevorzugten Ausführungsform werden zuerst mehrere Schichten mindestens eines Stützmaterials auf dem Empfängersubstrat abgeschieden. Anschließend wird das gewünschte Objekt durch Verdrucken von mindestens einem Baumaterial gebildet. Nach der Fertigstellung des eigentlichen Bauteils können weitere Schichten des Stützmaterials aufgebracht werden, so das Ober- und Unterseite des gedruckten Objekts durch ein oder mehrere Schichten des Stützmaterials begrenzt sind. In einer besonders bevorzugten Ausführungsform wird in jeder Schicht der äußere Rand um das Bauobjekt herum durch das Stützmaterial gebildet, so dass das fertig gedruckte Objekt allseitig von Stützmaterial umschlossen ist. In Bereichen des Bauteils, in denen sich der Querschnitt nicht stark verändert, können dickere Schichten verwendet werden, während bei Stellen, in denen sich der Bauteilquerschnitt schnell verändert, dünnere Schichten bevorzugt sind.

Optional kann die aufgebrachte Materialschicht zur Vorbereitung für den nächsten Auftragungszyklus in einem weiteren Verfahrensschritt geglättet werden, beispielsweise mit einer Metallwalze, einer Klinge, einem Abstreifer oder einer Fräse mit/ohne Materialabsaugung.

Das schichtweise Aufbringen wird so lange fortgesetzt, bis das gewünschte dreidimensionale Objekt fertiggestellt ist. Der Druckvorgang wird wie bei additiven Fertigungsverfahren üblich durch einen Computer mittels CAD-Daten gesteuert. Dabei wird Baumaterial in den Bereichen verwendet, die das Formteil bilden, und das Stützmaterial unterhalb von Überhängen, seitlich des Bauteils und in Hohlräumen.

In einer bevorzugten Ausführungsform des Verfahrens wird das Druckmaterial, d.h. Stütz- oder Baumaterial, während des Druckprozesses auf den Träger aufgebracht. Alternativ können auch bereits vorgängig beschichtete Substrate verwendet werden, bevorzugt in Form von beschichteten Trägerfolien. Vorzugsweise wird durch erneutes, selektives oder kontinuierliches Beschichten des Trägersubstrats neues Druckmaterial für den LIFT-Vorgang zur Verfügung gestellt.

Das erfindungsgemäße Verfahren ist vorzugsweise ein LIFT-Verfahren. Unter einem LIFT-Verfahren wird hier ein Verfahren verstanden, bei dem wie eingangs erläutert durch einen Energieimpuls aus einem Druckmaterial eine kleine Materialmenge herausgelöst und auf ein Empfängersubstrat übertragen wird. Der Energieimpuls wird vorzugsweise durch einen Laser erzeugt. Der Laserstrahl wird dabei auf einen kleinen Bereich des Stütz- oder Baumaterials fokussiert und hierdurch das Stütz- oder Baumaterial lokal so stark erhitzt, dass sich die Volumenausdehnungskomponente schlagartig ausdehnt, z.B. durch Verdampfen eines Anteils des Druckmaterials. Die Energietransformationskomponente absorbiert die Laserenergie und überträgt diese auf die Volumenausdehnungskomponente. Die schlagartig verdampfende Volumenausdehnungskomponente reißt das Stütz- oder Baumaterial mit und überträgt es auf das Empfängersubstrat. Es ist auch möglich, dass die Volumenausdehnungskomponente einen Teil der Energie direkt absorbiert.

Erfindungsgemäß kann anstelle eines Laserstrahls eine andere geeignete Energiequellen verwendet werden, beispielsweise fokussiertes Licht (nicht Laser) oder Teilchenstrahlen wie Elektronen- oder Ionenstrahlen. Der Einfachheit halber wird hier der Begriff LIFT-Verfahren auch für Verfahren verwendet, in denen kein Laser eingesetzt wird. Bevorzugt sind Laser, insbesondere Laser mit einer Wellenlänge von 300 nm bis 4000 nm, beispielsweise Neodym-YAG Laser mit einer Wellenläge von 1064 nm. Besonders bevorzugt ist gepulstes Laser-Licht mit einer Pulsenergie im µJ Bereich und einer Pulsdauer von 1 ns bis 1 µs.

Die **Energietransformationskomponente (a)** im Stützmaterial wird auf die Wellenlänge des zu absorbierenden Laserlichts abgestimmt. Als Energietransformationskomponente werden erfindungsgemäß anorganische und insbesondere organische Farbstoffe und Pigmente verwendet. Besonders bevorzugt sind Farbstoffe und Farbpigmente, die sich rückstandsfrei verbrennen lassen und die nach einem möglichen Entbinderungs-/Sintervorgang für z.B. keramische Bauteile keine Rückstände auf dem finalen Bauteil hinterlassen.

Bevorzugt sind zudem Farbstoffe und Pigmente, die im Wellenlängenbereich der eingesetzten Strahlenquelle, vorzugsweise Laser, absorbieren. Hier bieten sich beispielsweise für einen Neodym-YAG Laser mit einer Wellenlänge von 1064 nm folgende Farbstoffe/Pigmente besonders an: Carbon Black, Sudan Black B (CAS 4197-25-5), Bismarck Brown Y (CAS 10114-58-6), 1-Butyl-2-[2-[3-[(1-butyl-6-chlorobenz[cd]indol-2(1H)-ylidene)ethyl-idene]-2-chloro-1-cyclohexen-1-yl]ethenyl]-6-chlorobenz[cd]-indolium tetrafluoroborate (CAS 155613-98-2) oder Safranin O (CAS 477-73-6). Ganz besonders bevorzugt sind Carbon Black, Sudan Black B (CAS 4197-25-5) und Safranin O (CAS 477-73-6).

Für einen grünen Laser, z.B. mit einer Wellenlänge von 532 nm, sind folgende Farbstoffe/Pigmente bevorzugt: Carbon Black, Sudan Red 7B (Oil Violet CAS 6368-72-5), Sudan IV (CAS 85-83-6), Sudan Red G (CAS 1229-55-6), Pigment Rot 144 (CAS 5280-78-4), Safranin O (CAS 477-73-6).

Für einen blauen Laser, z.B. mit einer Wellenlänge von 405 nm, sind folgende Farbstoffe/Pigmente bevorzugt: Carbon Black, Pigment Gelb 93 (CAS 5580-57-4), Sudan Yellow 146 (CAS 4314-14-1), Disperse Yellow 7 (CAS 6300-37-4).

Die Energietransformationskomponente absorbiert den Hauptteil der Energie des angebrachten Energieimpulses, beispielsweise des einfallenden Laserstrahls, und wandelt diese in Wärme um. Der so erzeugte Wärmeimpuls wird auf die Volumenausdehnungskomponente übertragen und führt zu deren schlagartigen Ausdehnung, beispielsweise zur schlagartigen Bildung von mikroskopischen Gasbläschen durch Verdampfen der Volumenausdehnungskomponente. Hierdurch wird der Transfer des Druckmaterials vom Trägersubstrat auf das Empfängersubstrat induziert. Das Druckmaterial wird auf dem Empfängersubstrat abgeschieden.

Die **Volumenausdehnungskomponente (b)** hat den Hauptzweck, einen Transfer des Druckmaterials vom Trägersubstrat auf das Empfängersubstrat zu bewirken. Damit die absorbierte Energie zu einer kontrollierten Tropfenbildung führt, soll die Volumenausdehnungskomponente durch den Wärmeimpuls in kürzester Zeit in die Gasphase überführt werden. Als Volumenausdehnungskomponente wird erfindungsgemäß eine Substanz mit einem Siedepunkt von 80 - 280°C und besonders bevorzugt von 95 - 200°C eingesetzt (Siedepunkte bei Normaldruck), die aus 1,8-Octandiol, 1,6-Hexandiol, Wasser, 1-Octanol, Propylenglycoldiacetat, Ethylenglycoldiacetat, Triethyl-2-acetylcitrate, Triethylcitrat, Adibinsäuredimethylester, Adipinsäurediethylester, Triethylenglycol, Glutarsäurediethylester, Glutarsäuredimethylester, Diethylsuccinat, Essigsäurebutylester und Essigsäure-n-hexylester ausgewählt ist.

Besonders bevorzugt sind bei 25°C flüssige Substanzen, insbesondere Wasser und 1-Octanol. Wasser hat den Vorteil, dass beim Verdampfen keine gesundheitsschädlichen oder explosionsgefährlichen Lösungsmitteldämpfe entstehen.

Die Volumenausdehnungskomponente wird vorzugsweise so auf das verwendete Bindemittel abgestimmt, dass die Viskosität, die Oberflächenspannung und die Homogenität in den hierin definierten Bereichen liegen. Eine erfindungsgemäß geeignete Homogenität ist dann gegeben, wenn keine sichtbare Phasentrennung vorliegt. Hierzu werden polare Bindemittel wie PEG, PVA vorzugsweise mit einer polaren Volumenausdehnungskomponente wie z.B. Wasser und apolare Bindemittel wie Paraffin mit einer weniger polaren Volumenausdehnungskomponenten wie 1-Octanol kombiniert.

Als **Bindemittel (c)** werden Polymere, Wachse und/oder nichtionische Tenside eingesetzt, die bei einer Temperatur von unter 40°C fest sind.

Erfindungsgemäß bevorzugte Polymere sind Glykolpolymere, insbesondere Polyethylenglykol (PEG), Polypropylenglykol (PPG), PEG-PPG-Copolymere und PVA. Ganz besonders bevorzugt ist Polyethylenglykol (PEG) mit einem Molekulargewicht von 1500-10000g/mol. Weiter bevorzugt sind Polymere wie Polyacrylamid, Polyvinylpyrrolidon, Amylopektin, Gelatine, Cellulose, Polymere auf der Basis von Polyacrylsäure und insbesondere Copolymere von Acrylsäure oder Natriumacrylat mit Acrylamid. Diese Polymere sind polar und können Hydrogele bilden. Polare Polymere eignen sich besonders zur Kombination mit einer polaren Volumenausdehnungskomponente wie Wasser.

In der vorliegenden Erfindung ist der Begriff "Wachs" so zu verstehen, wie er von der Deutschen Gesellschaft für Fettwissenschaft in der DGF-Einheitsmethode MI1 (75) festgelegt wurde. Da die chemische Zusammensetzung und Herkunft verschiedener Wachse sehr unterschiedlich ist, werden Wachse über ihre mechanisch-physikalischen Eigenschaften definiert. Ein Stoff wird als Wachs bezeichnet, wenn er bei 20°C knetbar, fest bis brüchig hart, eine grobe bis feinkristalline Struktur aufweist, farblich durchscheinend bis opak, jedoch nicht glasartig ist; über 40°C ohne Zersetzung schmilzt, schon wenig oberhalb des Schmelzpunktes leicht flüssig (niedrigviskos) und nicht fadenziehend ist; eine stark temperaturabhängige Konsistenz und Löslichkeit aufweist, sowie unter leichtem Druck polierbar ist. Typischerweise gehen Wachse zwischen 40°C und 130°C in den schmelzflüssigen Zustand über; Wachse sind in der Regel wasserunlöslich. Vorzugsweise haben Wachse zur Verwendung in dem erfindungsgemäßen Stützmaterial einen Schmelzpunkt im Bereich von 40 bis kleiner 80°C, besonders bevorzugt von 45 bis 65°C.

Je nach ihrer Herkunft teilt man Wachse in drei Hauptgruppen ein, nämlich natürliche Wachse, wobei hier wiederum zwischen pflanzlichen und tierischen Wachsen, Mineralwachsen und petrochemischen Wachsen unterschieden wird; chemisch modifizierte Wachse und synthetische Wachse. Das als Bindemittel in dem erfindungsgemäßen Stützmaterial eingesetzte Wachs kann aus einer Wachsart oder auch aus Mischungen verschiedener Wachsarten bestehen.

In der vorliegenden Erfindung werden bevorzugt petrochemische Wachse, wie etwa Paraffinwachs (Hartparaffin), Petrolatum, Mikrowachs (Mikroparaffin) und deren Mischungen, besonders bevorzugt Paraffinwachs verwendet. Gut geeignet sind Paraffinwachse, die als Spritzgussbinder zur Fertigung von oxidkeramischen und nichtoxidkeramischen Bauteilen im Heißgießverfahren (Niederdruckspritzguss) kommerziell erhältlich sind, z.B. Paraffinwachs mit einem Schmelzpunkt ca. 54 - 56°C, einer Viskosität von 3 - 4 mPa·s bei 80°C. Häufig enthalten kommerziell erhältliche Wachse bereits Emulgatoren und/oder weitere Komponenten zur Anpassung der Rheologie.

Als Wachs können auch pflanzliche Wachse, z.B. Candelillawachs, Carnaubawachs, Japanwachs, Espartograswachs, Korkwachs, Guarumawachs, Reiskeimölwachs, Zuckerrohrwachs, Ouricurywachs, Montanwachs; tierische Wachse, z.B. Bienenwachs, Schellakwachs, Walrat, Lanolin (Wollwachs), Bürzelfett; Mineralwachse, z.B. Ceresin, Ozokerit (Erdwachs); chemisch modifizierte Wachse, z.B. Montanesterwachse, Sasolwachse, hydrierte Jojobawachse, oder synthetische Wachse, z.B. Polyalkylenwachse, Polyethylenglykolwachse, verwendet werden.

Nichtionische Tenside sind Stoffe mit grenzflächenaktiven Eigenschaften, die in wässrigen Medien keine Ionen bilden. Es handelt sich um Moleküle, die einen hydrophoben und einen hydrophilen Teil aufweisen. Durch Wahl der Länge und Art der hydrophoben und hydrophilen Teile kann die Gesamt-Hydrophobizität der Moleküle eingestellt werden.

Bevorzugt sind Stützmaterialien, die als nichtionisches Tensid (c) ein Tensid mit einem Schmelzpunkt von 40°C bis 120°C, bevorzugt 45°C bis 80°C enthalten.

Bevorzugte nichtionische Tenside sind die Ethoxylate von Fettalkoholen, Oxoalkoholen oder Fettsäuren, Fettsäureester von Zuckern und hydrierten Zuckern, Alkylglycoside sowie Blockpolymere des Ethylen- und Propylenoxids, insbesondere kurzkettige Block-Co-Oligomere.

Besonders bevorzugt sind Fettsäuresester von hydrierten Zuckern, insbesondere solche mit der Formel R'-CO-O-Zucker, wobei R' ein verzweigter oder bevorzugt gerader Alkylrest mit 10 bis 25 Kohlenstoffatomen, vorzugsweise 12 bis 22 Kohlenstoffatomen ist. Bevorzugt sind gerade Alkylreste mit 15 bis 22 Kohlenstoffatomen. "Zucker" steht für einen hydrierten Zuckerrest, der vorzugsweise 0- bis 5-fach ethoxyliert ist. Ganz besonders bevorzugt sind Fettsäureester des Sorbitols, insbesondere Sorbitanstearate wie z.B. Sorbitanmonostearat (CAS 1338-41-6).

Eine weitere bevorzugte Gruppe von Tensiden sind Ethoxylate von Fettsäuren, insbesondere solche mit der allgemeinen Formel R"-(CO)-(OCH₂CH₂)m-OH, in der R" ein verzweigter oder bevorzugt gerader Alkylrest mit 10 bis 25 Kohlenstoffatomen, vorzugsweise 12 bis 22 Kohlenstoffatomen ist. Besonders bevorzugt sind gerade Alkylreste mit 16 bis 22 Kohlenstoffatomen. m ist eine ganze Zahl von 0 bis 20, bevorzugt 0 bis 10 und besonders bevorzugt 0 bis 6.

Erfindungsgemäß ganz besonders bevorzugte Tenside sind Fettalkohole und Ethoxylate von Fettalkoholen, insbesondere Polyalkylenglycolether mit der allgemeinen Formel R-(OCH₂CH₂)n-OH, in der R ein Alkylrest mit 10 bis 20 Kohlenstoffatomen und n eine ganze Zahl von 0 bis 25 ist. R kann ein verzweigter oder bevorzugt gerader Alkylrest sein, wobei Alkylreste mit 12 bis 25 Kohlenstoffatomen und besonders gerade Alkylreste mit 12 bis 22 Kohlenstoffatomen bevorzugt sind. Ganz besonders bevorzugte Alkylreste sind Lauryl, Cetyl, Cetearyl und Stearyl. Die Polyalkylenglycolether sind durch Umsetzung der entsprechenden Fettalkohole mit Ethylenoxid (EO) erhältlich. Der Index n gibt die Anzahl an Ethylenoxidresten an. Polyalkylenglycolether mit 0 bis 21 (n = 2-21), insbesondere 0 bis 12 (n = 2-12) und ganz besonders 0 bis 5 (n = 2-5) Ethylenoxidresten sind bevorzugt. Beispiele für erfindungsgemäß bevorzugte Polyalkylenglycolether sind Verbindungen, in denen R ein Cetylrest (C₁₆-Rest)und n 20 und insbesondere 2 ist. Diese Verbindungen haben die INCI-Bezeichnungen Ceteth-2 und Ceteth-20. Ceteth-2 hat z.B. die Formel C₁₆H₃₃-(OCH₂CH₂)₂-OH. Weiter bevorzugt sind Verbindungen, in denen R ein Stearylrest (C₁₈-Rest) und n 2, 10, 20 oder 21 ist. Diese Verbindungen haben die INCI-Bezeichnungen Steareth-2, Steareth-10, Steareth-20 und Steareth-21. Steareth-2 hat z.B. die Formel C₁₈H₃₇-(OCH₂CH₂)₂-OH. Ganz besonders bevorzugte nichtionische Tenside sind Steareth-20, Steareth-10, Ceteth-20 und insbesondere Steareth-2 und Ceteth-2. Mischungen unterschiedlicher nichtionischer Tenside und insbesondere unterschiedlicher Polyalkylenglycolether können ebenfalls verwendet werden.

Bevorzugt sind Bindemittel mit einem Schmelzpunkt zwischen 40°C bis 200°C, besonders bevorzugt 50°C bis 80°C, wobei solche Bindemittel besonders bevorzugt sind, die sich beim Schmelzen nicht thermisch zersetzen. Im geschmolzenen Zustand hat das Bindemittels vorzugsweise eine Viskosität von unter 100 Pas, besonders bevorzugt unter 20 Pas und ganz besonders bevorzugt unter 5 Pas, damit es gut vom Bauteil entfernbar ist. Das Bindemittel sollte möglichst rückstandsfrei verbrennbar sein. Wichtig ist eine ausreichende Festigkeit des Stützmaterials im festen Zustand, um das Druckmaterial entsprechend unterstützen zu können.

Die Stützmaterialien können zur Einstellung der Oberflächenspannung und zur Einstellung der Grenzflächenspannung zwischen Stützmaterial und Träger, Stützmaterial und Empfänger und Stützmaterial und Baumaterial zusätzlich ein oder mehrere weitere Tenside enthalten. Durch die Einstellung von Oberflächen- und Grenzflächenspannung wird sichergestellt, dass sich die auf den Träger aufgebrachte Schicht des Stützmaterials nicht zusammenzieht (Bulging-Effekt), eine homogene Schicht auf dem Empfänger bildet und dass sich das Baumaterial nicht auf dem Stützmaterial zusammenzieht (Bulging-Effekt). Bevorzugte Tenside zur Einstellung der Ober- und Grenzflächenspannung sind ionische Tenside (z.B. Stearinsäure), amphotere Tenside (z.B. N,N,N-Trimethylammonioacetat) und bevorzugt die oben genannten nichtionischen Tenside, wobei hier Fettalkoholethoxylate (FA-EO) und Polyalkylenglycolether besonders bevorzugt sind. Gewisse Tenside, besonders die oben definierten nichtionischen Tenside, haben zusätzlich zur grenzflächenanpassenden Funktion auch eine Stützfunktion.

Die Stützmaterialen haben eine Viskosität von 0,2 Pas bis 1000 Pas und eine Oberflächenspannung von 20 bis 150 mN/m, bevorzugt 30 bis 100 mN/m und besonders bevorzugt 40 bis 90 mN/m.

Wenn nicht anders angegeben wird die Viskosität der Stützmaterialien mit einem Anton Paar Rheometer mit CP50-1 Konus-Platte-Messmittel bei einer Scherrate von 100/s und bei einer Temperatur von 25°C gemessen.

Die Oberflächen- und Grenzflächenspannung wird, wenn nicht anders angegeben, gemäß DIN 55660-1 bis -7 oder DIN 53914 (Prüfung von Tensiden Bestimmung der Oberflächenspannung) bei 25°C bestimmt.

Um die Bildung einer homogenen Schicht des Stütz- oder Baumaterials zu unterstützen, werden Stütz-/Baumaterial und Träger vorzugsweise aufeinander abgestimmt. Es wird eine geringe Grenzflächenspannung zwischen Stütz-/Baumaterial und Träger angestrebt. Für hydrophile Stütz-/Baumaterialen werden vorzugsweise hydrophile Träger- und/oder Empfängersubstrate verwendet, beispielsweise Glasträger, Cellophan oder hydrophile PET-Folien.

Oberflächen können z.B. durch Flamm-, Plasma- oder Ätzbehandlungen hydrophilisiert werden. Generell soll das Druckmaterial den Träger gut benetzten. Durch die Zugabe eines Tensids zum Druckmaterial kann die Benetzung ebenfalls verbessert werden. Da erfindungsgemäß wässrige Stützmaterialien bevorzugt sind, sind hydrophile Träger bevorzugt. Bei hydrophoben Stütz-/Baumaterialen sind hydrophobe Träger bevorzugt.

Zur Erzielung optimaler Druckergebnisse ist eine Abstimmung von Art und Mengen der verwendeten Komponenten in dem Stützmaterial erforderlich. Erfindungsgemäß wurde festgestellt, dass sich die genannten Stoffe gut miteinander mischen lassen und homogene Zusammensetzungen ergeben. Die Mengenanteile der Komponenten lassen sich dabei in weiten Bereichen variieren, so dass sich die Viskosität und die Oberflächenspannung gezielt einstellen lassen.

Die Volumenausdehnungskomponente soll idealerweise schon beim Druckvorgang, respektive der Tropfengenerierung und Tropfentransfer, weitgehend verdampfen, so dass die auf dem Empfänger auftreffende Tröpfchen möglichst wenig davon enthalten. Auf diese Weise wird ein Trocknen bzw. Verfestigen der gedruckten Schichten beschleunigt und ein separater Trocknungsschritt im Idealfall überflüssig gemacht. Außerdem wird ein Volumenschrumpf der gedruckten Schichten beim Trocknen minimiert, Schrumpfungsrissen vorgebeugt und die Gefahr, dass bereits verdrucktes Stützmaterial durch neu abgeschiedene Tropfen wieder gelöst wird, reduziert.

Die Volumenausdehnungskomponente wird daher vorzugsweise in einer möglichst geringen Menge eingesetzt. Durch die Art und Menge der Volumenausdehnungskomponente wird die Trocknungskinetik so auf den Prozess abgestimmt, dass einerseits der Materialfilm auf dem Trägersubstrat nicht zu schnell trocknet und genügend Volumenausdehnungskomponente enthält, um den gewünschten Transfer des Materials auf das Empfängersubstrat zu bewirken. Andererseits soll die Volumenausdehnungskomponente beim Transfer möglichst weitgehend verdampfen. Das Bindemittel wird durch die Expansion der Volumenausdehnungskomponente auf das Empfängersubstrat übertragen. Dort verfestigt es sich durch Abdampfen der Volumenausdehnungskomponente und/oder Erstarren nach dem Schmelzen bei der Tropfengenerierung rasch wieder und zeigt eine gute Haftung am Empfängersubstrat oder zuvor gebildeten Schichten.

Art und Menge der Volumenausdehnungskomponente werden vorzugsweise so gewählt, dass sich der Anteil der Volumenausdehnungskomponente vom Materialauftrag auf den Träger bis zum Zeitpunkt des Energieeintrags soweit reduziert, dass das Material nur noch so viel Volumenausdehnungskomponente enthält, wie für die Tropfengenerierung und Koaleszenz der Tropfen auf dem Empfängersubstrat nötig ist, damit der Volumenschrumpf beim Trocknen möglichst gering ist.

Die Stützmaterialien können neben den genannten Stoffen vorzugsweise ein oder mehrere **Additive** enthalten. Bevorzugte Additive sind Stabilisatoren wie Methyl-hydrochinon (MEHQ) und 2,6-Di-tert-butyl-p-kresol (BHT); Rheologiemodifizierungsmittel wie Polyvinylalkohol, Hydroxyethylcellulose, Carboxymethylcellolose, Polyvinylpyrrolidon; Duftstoffe wie 2-Benzylidenheptanal (Amylzimtaldehyd), Ethyl-2-naphthylether und ätherische Öle; und Füllstoffe. Bevorzugt sind organische Füllstoffe, die rückstandsfrei verbrennen. Als Additive kommen weiterhin antimikrobielle Stoffe wie Polyformaldehyd, Parabene wie Hydroxybenzoesäuremethylester in Betracht.

Unter Füllstoffen werden Stoffe verstanden, die während des ganzen Prozesses fest sind und bleiben, wohingegen Bindemittel im Verlauf des Prozesses einen Phasenübergang zeigen, z.B. von fest nach flüssig und wieder nach fest, vorzugsweise von gelöst nach fest.

Wesentlich für einen reproduzierbaren Druckvorgang ist die Bildung von Tröpfchen mit definierter Größe ohne die Bildung sogenannter "Satelliten". Unter Satelliten werden kleinere Tröpfchen verstanden, die zusätzlich zum "Haupttropfen" entstehen und die Druckqualität verschlechtern. Die Tröpfchenbildung wird massgeblich durch Temperatur, Luftstrom und die Zeit zwischen dem Aufrakeln der Trägerschicht und der Tropfengenerierung beeinflusst. Für die Genauigkeit des Druckvorgangs ist weiterhin die Formstabilität der Stützmaterialschicht auf dem Empfänger unter thermischer Belastung und die Eigenschaftsveränderung von Bedeutung.

Die erfindungsgemäß verwendeten Stützmaterialien enthalten vorzugsweise:
0,05 bis 20 Gew-% Energietransformationskomponente (a),
8 bis 50 Gew-% Volumenausdehnungskomponente (b),
40 bis 90 Gew-% und besonders bevorzugt 49 bis 90 Gew.-% Bindemittel (c)

Alle Mengenangaben beziehen sich, wenn nicht anders angegeben, auf die Gesamtmasse der Zusammensetzung.

Die Materialien eignen sich besonders zur Verwendung als Stützmaterial in einem LIFT-Verfahren. Sie sollten sich in Kombination mit den verwendeten Baummaterialien bevorzugt inert verhalten. Die Baumaterialien werden zusammen, vorzugsweise sequenziell, mit dem Stützmaterial verdruckt.

Erfindungsgemäß sind Stützmaterialien bevorzugt, die in verfestigtem Zustand keine Komponenten enthalten, die die mit dem verwendeten Baumaterial reagieren. Dies würde das Entfernen der Stützmaterialien aus dem Formkörper erschweren. Generell sind solche Stützmaterialien bevorzugt, die ausschließlich organische Komponenten enthalten.

Der Vorteil des erfindungsgemäßen LIFT-Verfahrens ist, dass unterschiedlichste Materialien selektiv aufgetragen und im Anschluss an den Materialauftrag ihren Eigenschaften entsprechend eigenständig aushärten bzw. sich verfestigen oder durch einen zusätzlichen Prozessschritt ausgehärtet bzw. verfestigt werden können.

Zur Fertigung von zahntechnischen Produkten werden gemäß einer Ausführungsform gefüllte oder ungefüllte **reaktive Baumaterialien** verwendet, die nach dem selektiven Auftrag durch eine Polymerisation gehärtete werden können. Bevorzugt sind insbesondere photoreaktive Materialien. Besonders bevorzugt sind die in EP 2 151 214 B1 beschriebenen Materialien.

Die reaktiven Baumaterialien enthalten:
(α) 20 bis 98 Gew.-% mindestens eines polymerisierbaren Bindemittels, bevorzugt eines radikalisch polymerisierbaren Bindemittels,
(β) 0,5 bis 15 Gew.-% mindestens eines flüssigen, radikalisch polymerisierbaren Monomers mit einem Siedepunkt von weniger als 200°C als Volumenausdehnungskomponente,
(γ) 0,05 bis 5 Gew.-% mindestens eines Initiators für die Polymerisation, vorzugsweise einen Initiator für die radikalische Polymerisation, besonders bevorzugt einen Photoinitiator, und
(δ) 0 bis 5 Gew.-% mindestens eines anorganischen oder organischen Farbstoffs und/oder eines Pigments als Energietransformationskomponente.

Das erfindungsgemäße Verfahren zeichnet sich dadurch aus, dass als Baumaterial ein Werkstoff verwendet wird, der als **Bindemittel (α)** vorzugsweise ein radikalisch polymerisierbares Bindemittel enthält.

Als radikalisch polymerisierbare Bindemittel (α) eignen sich besonders mono- oder multifunktionelle (Meth)acrylate oder deren Mischungen. Unter monofunktionellen (Meth)acrylverbindungen werden Verbindungen mit einer, unter mehrfach funktionellen (Meth)acrylverbindungen Verbindungen mit zwei oder mehr, vorzugsweise 2 bis 3 polymerisierbaren Gruppen verstanden. Geeignete Beispiele sind Methyl-, Ethyl-, 2-Hydroxyethyl-, Butyl-, Benzyl-, Tetrahydrofurfuryl- oder Isobornyl(meth)acrylat, p-Cumylphenoxyethylenglycolmethacrylat (CMP-1E), Bisphenol-A-di(meth)acrylat, Bis-GMA (ein Additionsprodukt aus Methacrylsäure und Bisphenol-A-diglycidylether), ethoxy- oder propoxyliertes Bisphenol-A-Dimethacrylat wie z.B. das Bisphenol-A-Dimethacrylat mit 3 Ethoxygruppen (SR-348c, Fa. Sartomer) oder 2,2-Bis[4-(2-methacryloxypropoxy)phenyl]-propan, UDMA (ein Additionsprodukt aus 2-Hydroxyethylmethacrylat und 2,2,4-Trimethylhexamethylendiisocyanat), Di-, Tri- oder Tetraethylenglycoldi(meth)acrylat, Trimethylolpropantri(meth)acrylat, Pentaerythrittetra(meth)acrylat, sowie Glycerindi- und -trimethacrylat, 1,4-Butandioldi(meth)acrylat, 1,10-Decandioldi(meth)acrylat (D3MA) oder 1,12-Dodecandioldi-(meth)acrylat. Bevorzugte (Meth)acrylatmonomere sind Benzyl-, Tetrahydrofurfuryl- oder Isobornylmethacrylat, p-Cumylphenoxyethylenglycolmethacrylat, 2,2-Bis[4-(2-methacryloxy-propoxy) phenyl]propan, Bis-GMA, UDMA, SR-348c und D3MA.

Als radikalisch polymerisierbares Bindemittel (α) lassen sich auch N-mono- oder N-disubstitiuierte Acrylamide wie z.B. N-Ethylacrylamid oder N,N-Dimethacrylamid oder Bisacrylamide wie z.B. N,N'-Diethyl-1,3-bis(acrylamido)propan, 1,3-Bis(methacrylamido)-propan, 1,4-Bis(acrylamido)butan oder 1,4-Bis-(acryloyl)piperazin einsetzen.

Weiterhin lassen sich als radikalisch polymerisierbares Bindemittel (α) auch bekannte schrumpfungsarme radikalisch ringöffnend polymerisierbare Monomere, wie z.B. mono- oder multifunktionelle Vinylcyclopropane bzw. bicyclische Cyclopropanderivate (vgl. DE 196 16 183 C2 bzw. EP 1 413 569 A1), oder cyclische Allylsulfide (vgl. US 6,043,361 oder US 6,344,556) einsetzen, die darüber hinaus auch in Kombination mit den vorstehend aufgeführten Di(meth)acrylat-Vernetzern verwendet werden können.

Außerdem können als radikalisch polymerisierbares Bindemittel (α) auch radikalisch polymerisierbare Polysiloxane eingesetzt werden, die aus geeigneten Methacrylsilanen wie z.B. 3-(Methacryloyloxy)propyltrimethoxysilan hergestellt werden können und z.B. in der DE 199 03 177 C2 beschrieben sind.

Vorzugsweise werden Mischungen der vorstehend genannten Monomere verwendet.

Alternativ können kationische Monomere als Bindemittel (α) eingesetzt werden, beispielsweise kationisch ringöffnend poly-merisier¬bare Monomere wie Glycidylether oder cycloaliphatische Epoxide, cyclische Ke¬tenacetale, Spiroorthocarbonate, Oxetane oder bicyclische Orthoester. Bevorzugte Beispiele sind 2-Methylen-1,4,6-trioxaspiro[2.2]nonan, 3,9-Dimethylen-1,5,7,11tetraoxaspiro[5.5]undecan, 2-Methylen-1,3-dioxepan, 2-Phenyl-4-methylen-1,3-dioxolan, Bisphenol-A-diglycidylether, 3,4-Epoxycyclohexylmethyl-3,4-epoxycyclohexancarb¬oxylat, Bis-(3,4-epoxycyclohexylmethyl)adipat, Vinylcyclohexendioxid, 3-Ethyl-3-hy¬droxymethyloxetan, 1,10-Decandiyl-bis-(oxymethylen)-bis-(3-ethyloxetan) oder 3,3-(4-Xylylendioxy)-bis-(methyl-3-ethyloxetan) sowie die in der EP 0 879 257 B1 genannten Epoxide. Als kationisch polymerisierbare Bindemittel (α) eignen sich auch Kieselsäurepolykondensate, die beispielsweise durch hydrolytische Kondensation von Silanen erhältlich sind, die kationisch polymerisierbare Gruppen, bevorzugt Epoxid-, Oxetan-, oder Spiroorthoestergruppen, tragen. Solche Kieselsäurepolykondensate sind beispielsweise in der DE 41 33 494 C2 oder US 6,096,903 beschrieben. Außerdem lassen sich als kationische Monomere auch Vinylether, wie z.B. Ethyl- oder Isobutyl-vinylether, sowie N-Vinylpyrrolidon einsetzen.

Die reaktiven Baumaterialien enthalten als **Volumenausdehnungskomponente (ß)** mindestens ein flüssiges, radikalisch polymerisierbares Monomer, insbesondere ein Mono (meth) acrylat, mit einem Siedepunkt von weniger als 200°C bei Normaldruck. Besonders bevorzugt sind Methyl(meth)acrylat, Ethyl(meth)acrylat, Propyl(meth)acrylat, Butyl(meth)acrylat, Pentyl(meth)acrylat, Hexyl(meth)acrylat und N,N-Dimethylacrylamid. Bevorzugt sind solche Stoffe, die bei 20°C einen Dampfdruck von maximal 60 mbar, besonders bevorzugt maximal 40 mbar aufweisen.

Die genannten Volumenausdehnungskomponenten zeichnen sich dadurch aus, dass sie bei der Aushärtung der Werkstoffe anders als nicht reaktive Komponenten an der Reaktion teilnehmen und in das Polymernetzwerk eingebunden werden. Sie werden daher im klinischen Einsatz nicht aus dem Material herausgelöst, was im Hinblick auf die Herstellung von Dentalrestaurationen ein wesentlicher Vorteil ist.

Die reaktiven Baumaterialien enthalten weiterhin einen **Initiator für die Polymerisation (γ),** vorzugsweise einen Initiator für die radikalische Polymerisation und ganz besonders bevorzugt einen Photoinitiator für die radikalische Polymerisation, beispielsweise einen Photopolymerisationsinitiator für den UV-Bereich, einen Photopolymerisationsinitiator für den sichtbaren Bereich oder eine Mischung davon.

Das langwelligste Absorptionsmaximum des Photopolymerisationsinitiators (γ) für den UV-Bereich liegt vorzugsweise bei einer Wellenlänge von weniger als 400 nm, insbesondere im Bereich von 300 bis weniger als 400 nm, bevorzugt im Bereich von 330 bis weniger als 400 nm, besonders bevorzugt im Bereich von 345 bis weniger als 400 nm und am meisten bevorzugt im Bereich von 360 bis weniger als 400 nm.

Das langwelligste Absorptionsmaximum des Photopolymerisationsinitiators (γ) für den sichtbaren Bereich liegt vorzugsweise bei einer Wellenlänge von mindestens 400 nm, insbesondere im Bereich von 400 bis 600 nm, besonders bevorzugt im Bereich von 400 bis 500 nm und am meisten bevorzugt im Bereich von 420 bis 480 nm.

Die Absorptionsspektren der Photopolymerisationsinitiatoren können sich in gewissen Grenzen überschneiden. Vorzugsweise beträgt die Differenz der langwelligsten Absorptionsmaxima des ersten und zweiten Photopolymerisationsinitiators mindestens 5 nm, insbesondere mindestens 10 nm, am meisten bevorzugt mindestens 15 nm. Außerdem ist es bevorzugt, dass der erste Photopolymerisationsinitiator im Wellenlängenbereich von 420 bis 750 nm und insbesondere im Wellenlängenbereich von 440 bis 700 nm einen molaren dekadischen Extinktionskoeffizienten von weniger als 10 l/(mol·cm) aufweist.

Als Photopolymerisationsinitiatoren (γ) für den UV-Bereich eignen sich insbesondere Phosphinoxide, Benzoine, Benzilketale, Acetophenone, Benzophenone, Thioxanthone sowie Mischungen davon. Besonders geeignet sind Acyl- und Bisacylphosphinoxide wie 2,4,6-Trimethylbenzoyldiphenylphosphinoxid oder Bis-(2,4,6-trimethylbenzoyl)phenylphosphinoxid, Benzoin, Benzoinalkylether, Benzildialkylketale wie Benzyldimethylketal, α-Hydroxyacetophenone wie 1-Hydroxy-cyclohexyl-phenyl-keton, 2-Hydroxy-2-methyl-1-phenyl-1-propanon oder 2-Hydroxy-1-[4-(2-hydroxyethoxy)-phenyl]-2-methyl-1-propanon, α-Dialkoxyacetophenone, α-Aminoacetophenone wie 2-Benzyl-2-(dimethylamino)-1-[4-(4-morpholinyl)-phenyl]-1-butanon oder 2-Methyl-1-[4-(methylthio)-phenyl]-2-(4-morpholinyl)-1-propanon, Alkylthioxanthone wie i-Propylthioxanthon sowie Mischungen davon. Acyl- und Bisacylphosphinoxide und insbesondere 2,4,6-Trimethylbenzoyldiphenylphosphinoxid, Bis-(2,4,6-trimethylbenzoyl)-phenylphosphinoxid und deren Mischungen sind besonders bevorzugt.

Als Photopolymerisationsinitiatoren (γ) für den sichtbaren Bereich eignen sich insbesondere α-Diketone, Acylgermanium-Verbindungen, Metallocene sowie Mischungen davon. Besonders geeignet sind α-Diketone wie Campherchinon, 9,10-Phenanthrenchinon, 1-Phenyl-propan-1,2-dion, Diacetyl, 4,4'-Dichlorbenzil oder deren Derivate, Monoacyl- und Diacylgermanium-Verbindungen wie Benzoyltrimethylgermanium, Dibenzoyldiethylgermanium oder Bis-(4-methoxybenzoyl)-diethylgermanium, Titanocene wie Bis-(η⁵-2,4-cyclopentadien-1-yl)-bis-[2,6-difluor-3-(1H-pyrrol-1-yl)phenyl]-titan sowie Mischungen davon. α-Diketone und insbesondere Campherchinon, 1-Phenylpropan-1,2-dion und deren Mischungen sind besonders bevorzugt. Monoacyltrialkyl- und Diacyldialkylgermanium-Verbindungen und insbesondere Benzoyltrimethylgermanium, Dibenzoyldiethylgermanium, Bis-(4-methoxybenzoyl)-diethylgermanium und deren Mischungen sind ebenfalls besonders bevorzugt. Ganz besonders bevorzugt sind auch Mischungen von mindestens einem α-Diketon und mindestens einer Acylgermanium-Verbindung.

α-Diketone werden vorzugsweise in Kombination mit Aminbeschleunigern eingesetzt. Als Aminbeschleuniger werden üblicherweise tertiäre Amine verwendet. Geeignet sind insbesondere tertiäre aromatische Amine wie N,N-Dialkyl-aniline, N,N-Dialkyl-p-toluidine oder N,N-Dialkyl-3,5-xylidine, p-(N,N-dialkylamino)-phenylethanole, p-(N,N-dialkylamino)-benzoe-säurederivate, p-(N,N-dialkylamino)-benzaldehyde, p-(N,N-di-alkylamino)-phenylessigsäureester oder p-(N,N-dialkylamino)-phenylpropionsäureester. Konkrete Beispiele hierfür sind N,N-Dimethylanilin, N,N-Dimethyl-p-toluidin, 3,5,N,N-Tetramethylanilin, p-(N,N-Dimethylamino)-benzaldehyd, p-(Dimethylamino)-benzoesäureethylester und p-(Dimethylamino)-benzonitril sowie Mischungen davon. Geeignet sind auch tertiäre aliphatische Amine wie Tri-n-butylamin, 2-Dimethylaminoethanol, Triethanolamin, Dimethylaminoethylmethacrylat, N,N-Dimethylbenzylamin, heterocyclische Amine wie 1,2,2,6,6-Pentamethylpiperidin, Aminosäure-Derivate wie N-Phenylglycin sowie Mischungen davon. p-(Dimethylamino)-benzoesäureethylester, Dimethylaminoethylmethacrylat, N,N-Dimethylanilin, N,N-Dimethyl-p-toluidin, Triethanolamin und deren Mischungen sind besonders bevorzugt. Dabei sind insbesondere solche Photopolymerisationsinitiatoren bevorzugt, welche bei der Einbringung von Strahlung, deren Emissionsmaximum bei einer Wellenlänge von mindestens 400 nm liegt, ausbleichen und so nach der weiteren Aushärtung keine störende Eigenfärbung mehr besitzen. Dies trifft insbesondere auf die genannten Acylgermanium-Verbindungen zu.

In einer bevorzugten Ausführungsform wird als Photopolymerisationsinitiator (γ) für den sichtbaren Bereich eine Mischung von mindestens einer Germanium-Verbindung mit mindestens einem α-Diketon in Kombination mit mindestens einem Aminbeschleuniger verwendet. Ganz besonders bevorzugte Kombinationen dieser Photopolymerisationsinitiatoren werden in EP 2 649 981 A1 beschrieben.

Die Verwendung von zwei oder mehr Photoinitiatoren, die in unterschiedlichen Wellenlängenbereichen aktiv sind, sind bevorzugt. Der erste Photoinitiator ist dabei in dem Wellenlängenbereich aktiv, der zur Härtung der Materialien in Schritt (3) verwendet wird, der zweite Initiator in dem Wellenlängenbereich, der zur Nachvergütung in Schritt (6) verwendet wird. Bevorzugte Initiatorkombinationen werden z.B. in EP 2 751 618 A2 beschrieben.

Reaktive Baumaterialien auf der Basis von kationisch polymerisierbaren Monomeren lassen sich vorzugsweise mit den bekannten kationischen Photoinitiatoren, besonders mit Diaryliodonium- oder Triarylsulfoniumsalzen, ggf. in Gegenwart geeigneter Sensibilisatoren, wie z.B. Campherchinon, Monoacyltrialkyl- bzw. Diacyl-dialkylgermanium-Verbindungen, wie z.B. Benzoyltrimethylgermanium, Dibenzoyldi¬ethylgermanium oder Bis(4-methoxybenzoyl)diethylgermanium, aushärten. Beispiele für geeignete Diaryliodoniumsalze, die mit Campherchinon, Monoacyltrialkyl- bzw. Di-acyldialkylgermanium-Verbindungen oder Thioxanthonen als Sensibilisator im sichtbaren Bereich eingesetzt werden können, sind die kommerziell zugänglichen Stoffe 4-Octyl¬oxy-phenyl-phenyliodoniumhexafluoroantimonat und Isopropylphenyl-methylphenyl-iodoniumtetrakis(pentafluorophenyl)borat.

Die vorzugsweise ebenfalls vorhandene **Energietransformationskomponente (δ)** wird auf die Wellenlänge des zu absorbierenden Laserlichts abgestimmt. Als Energietransformationskomponente werden anorganische und insbesondere organische Farbstoffe und Pigmente verwendet.

Bevorzugt sind insbesondere Farbstoffe und Pigmente, die im Wellenlängenbereich der eingesetzten Strahlenquelle, vorzugsweise Laser, absorbieren. Hier bieten sich beispielsweise für einen Neodym-YAG Laser mit einer Wellenlänge von 1064 nm folgende Farbstoffe/Pigmente besonders an: Carbon Black, Sudan Black B (CAS 4197-25-5), Bismarck Brown Y (CAS 10114-58-6), 1-Butyl-2-[2-[3-[(1-butyl-6-chlorobenz[cd]indol-2(1H)-ylidene)-ethylidene]-2-chloro-1-cyclohexen-1-yl]ethenyl]-6-chlorobenz-[cd]indolium tetrafluoroborate (CAS 155613-98-2) oder Safranin O (CAS 477-73-6). Ganz besonders bevorzugt sind Carbon Black, Sudan Black B (CAS 4197-25-5) und Safranin O (CAS 477-73-6).

Für einen grünen Laser, z.B. mit einer Wellenlänge von 532 nm, sind folgende Farbstoffe/Pigmente bevorzugt: Carbon Black, Sudan Red 7B (Oil Violet CAS 6368-72-5), Sudan IV (CAS 85-83-6), Sudan Red G (CAS 1229-55-6), Pigment Rot 144 (CAS 5280-78-4), Safranin O (CAS 477-73-6).

Für einen blauen Laser, z.B. mit einer Wellenlänge von 405 nm, sind folgende Farbstoffe/Pigmente bevorzugt: Carbon Black, Pigment Gelb 93 (CAS 5580-57-4), Sudan Yellow 146 (CAS 4314-14-1), Disperse Yellow 7 (CAS 6300-37-4).

Neben der Energietransformationskomponente können die Werkstoffe vorteilhaft weitere **farbgebende Komponenten** enthalten. Als farbgebende Komponente sind anorganische und organische Pigmente bevorzugt, besonders schwermetallfreie, d.h. insbesondere Cd- und Pb-freie Pigmente. Die gebräuchlichsten anorganischen Pigmente sind solche auf der Basis der verschiedenen Eisenoxide, Chromate und Molybdate. Als organische Pigmente werden hauptsächlich Azopigmente, wie Monoazo-, Disazo-, Benzimidazolon- und Isoindolononpigmente, sowie polycyclische Pigmente, wie Phthalocyanin-, Thioindigo-, Flavanthron-, Dioxazin- und Anthantronpigmente, verwendet. Diese Substanzklassen werden durch die Verwendung von verschiedenen Substituenten hinsichtlich der Farbnuance und der Farbtiefe modifiziert. Herstellung, Anwendung und Eigenschaften der gebräuchlichsten organischen Pigmente werden ausführlich in Herbst/Hunger, "Industrielle Organische Pigmente", VCH-Verlagsgesellschaft, Weinheim, 1987 beschrieben.

Als Pigmente eignen sich besonders Ultramarinblau, Pigmente auf der Basis von Eisenoxid, Titandioxid, Kobalt-, Aluminium-, Chrom-, Nickel-, Zirkon- und/oder Zinkoxid, Ruß und organische farbige Pigmente. Weiterhin sind organische Pigmente, wie beispielsweise rote Diazokondensationspigmente, z.B. Microlith^{®} rot BR-T (Fa. CIBA, Specialities) und gelbe Benzimidazolonpigmente, z.B. PV-Echtgelb H2G 01 (Fa. Hoechst), geeignet. Die Eisenoxidpigmente können eine rote, gelbe, braune oder schwarze Farbe aufweisen. Bevorzugte Pigmente sind schwarzes Eisenoxid, braunes Eisenoxid, gelbes organisches Pigment, rotes organisches Pigment und Titandioxid.

Die reaktiven Baumaterialien können neben den genannten Stoffen vorzugsweise **weitere Bestandteile** enthalten, insbesondere einen oder mehrere Füllstoffe, Phasenänderungsmittel, Netzmittel, Stabilisatoren und andere Additive.

Bevorzugte **Füllstoffe** sind organische oder anorganische Füllstoffpartikel. Bevorzugte anorganische partikuläre Füllstoffe sind amorphe kugelförmige Materialien auf Basis von Oxiden wie ZrO2 und TiO2 oder Mischoxiden aus SiO₂, ZrO₂ und/oder TiO₂ mit einer mittleren durchschnittlichen Partikelgröße von 0,005 bis 2 µm, vorzugsweise 0,1 bis 1 µm, nanopartikuläre oder mikrofeine Füllstoffe wie pyrogene Kieselsäure oder Fällungskieselsäure mit einer mittleren durchschnittlichen Partikelgröße von 5 bis 200 nm, vorzugsweise 10 bis 100 nm, Minifüllstoffe wie Quarz-, Glaskeramik- oder Glaspulver mit einer durchschnittlichen Teilchengröße von 0,01 bis 10 µm, vorzugsweise 0,1 bis 1 µm, sowie röntgenopake Füllstoffe wie Ytterbiumtrifluorid oder nanopartikuläres Tantal(V)-oxid bzw. Bariumsulfat mit einer mittleren durchschnittlichen Partikelgröße von 10 bis 1000 nm, vorzugsweise 100 bis 300 nm.

Weiter bevorzugt sind sogenannte Isofüller. Hierbei handelt es sich um zerkleinerte Polymere, die vorzugsweise einen anorganischen Füllstoff enthalten. Bevorzugt sind Polymere, die durch Polymerisation der oben definierten radikalisch polymerisierbaren Bindemittel (Bindemittel a) erhalten werden. Als anorganische Füllstoffe sind die oben genannten Füllstoffe und insbesondere silanisierte, hoch disperse Kieselsäuren, Gläser und röntgenopake Füllstoffe wie Ytterbiumfluorid bevorzugt. Isofüller dienen zur Erhöhung des Füllgrads, zur Reduktion des Polymerisationsschrumpfes sowie zur Steuerung der Konsistenz und der Ästhetik der verarbeiteten Werkstoffe.

Bevorzugte **Phasenänderungsmittel** sind Monomere mit wachsähnlichen Eigenschaften zur Einstellung der Lagerviskosität. Die Phasenänderungsmittel bewirken eine Phasenumwandlung von fest (nach dem Auftragen und Abkühlen auf dem Träger) nach flüssig (Verflüssigung durch den Wärmeeintrag des Lasers). Bevorzugte Phasenänderungsmittel sind Stearylmethacrylat, Tris(2-hydroxyethylisocyanurattrimethacrylat sowie die in DE 196 26 356 A1 beschriebenen wachsartigen polymerisierbaren Substanzen.

Unter der Lagerviskosität wird die Viskosität verstanden, die die Werkstoffe unter gewöhnlichen Lagerbedingungen, d.h. insbesondere bei Raumtemperatur (25°C), aufweisen. Eine hohe Viskosität bei Lagertemperatur reduziert das Sedimentieren von Pigmenten oder Füllstoffen.

Um eine homogene Mischung zu erhalten, wird das Phasenänderungsmittel vorzugsweise oberhalb seines Schmelzpunktes mit den übrigen Komponenten vermischt. Hierzu wird das Phasenänderungsmittel vorzugsweise zunächst bei Raumtemperatur mit der Hauptmasse vermengt, und die Mischung dann unter stetigem Rühren erwärmt. Alle folgenden Schritte werden bei Temperaturen oberhalb des Schmelzpunktes des Phasenänderungsmittels vorgenommen.

Bevorzugte **Netzmittel** sind Tenside. Diese dienen zur Einstellung der Oberflächenspannung und zur Einstellung der Grenzflächenspannung zwischen Baumaterial und Träger, Stützmaterial und Empfänger und Stützmaterial und Baumaterial. Durch die Einstellung von Oberflächen- und Grenzflächenspannung wird sichergestellt, dass sich die auf den Träger aufgebrachte Schicht des Stützmaterials nicht zusammenzieht (Bulging-Effekt), eine homogene Schicht auf dem Empfänger bildet und dass sich das Baumaterial nicht auf dem Stützmaterial zusammenzieht (Bulging-Effekt). Bevorzugte Tenside sind klassische ionische (z.B. Stearinsäure), amphotere (N,N,N-Trimethyl-ammonioacetat) und bevorzugt nichtionische Tenside (Polyalkylenglycolether (Fettalkoholethoxylate (FAEO)). Gewisse Tenside, besonders die oben definierten nichtionischen Tenside, haben zusätzlich zur grenzflächenanpassenden Funktion auch eine Stützfunktion.

Bevorzugte **Stabilisatoren** sind Methyl-hydrochinon (MEHQ) und 2,6-Di-tert-butyl-p-kresol (BHT), Hydrochinon (HQ) und (2,2,6,6-Tetramethylpiperidin-1-yl)oxidanyl (TEMPO). Stabilisatoren dienen primär zur Verbesserung der Lagerstabilität der Werkstoffe.

Darüber hinaus können die reaktiven Baumaterialien weitere Additive enthalten, insbesondere Rheologiemodifizierungsmittel, wie Polyvinylalkohol, Hydroxyethylcellulose, Carboxymethylcellolose, modifizierte Fettderivate, Polyvinylpyrrolidon; Duft- und Aromastoffe, wie 2-Benzylidenheptanal (Amylzimtaldehyd), Ethyl-2-naphthylether und ätherische Öle. Als Additive kommen weiterhin Konservierungsmittel mit antimikrobieller und fungizider Wirkung wie Polyformaldehyd, Parabene wie 4-Hydroxybenzoesäuremethylester, 4-Hydroxybenzoesäurebutylester oder deren Salze, mikro- oder nanopartikuläres Silber sowie Propionsäure und ihre Salze in Betracht. Ausserdem können die Zusammensetzungen Lösungsmittel wie Wasser oder Ethanol oder entsprechende Lösungsmittelgemische, fluoridionenabgebende Additive, optische Aufheller und/oder Weichmacher als weitere Additive enthalten.

Die reaktiven Baumaterialien weisen vorzugsweise die in der folgenden Tabelle angegebene Zusammensetzung auf. Alle Angaben sind in Gew.-% und beziehen sich auf die Gesamtmasse des Baumaterials.

| **Komponente** | **bevorzugt** | **besonders bevorzugt** | **ganz besonders bevorzugt** |
|---|---|---|---|
| Bindemittel (α) | 20-98% | 40-95% | 58-90% |
| Farbgebende Komponente | 0-10% | 0,01-5% | 0,1%-2% |
| Energietransformationskomponente (δ) | 0-5% | 0,001-2% | 0,05-1% |
| Volumenausdehnungskomponente (β) | 0, 5-15% | 1-10% | 1,5-7% |
| Phasenänderungsmittel | 0-10% | 0-8% | 0-5% |
| Füllstoff | 0-78% | 0-50% | 0-40% |
| Initiator (γ) | 0,05-5% | 0,1-3% | 0,2-2% |
| Stabilisator | 0,001%-0,1% | 0,005-0,07% | 0,01-0,05% |
| Netzmittel | 0-2% | 0-1% | 0-0,5% |

Gemäß einer weiteren Ausführungsform der Erfindung wird ein **nicht reaktives Baumaterial** verwendet, das eine Keramikpartikel-Suspensionen von Zirkonoxid in einem flüssigen Medium enthält und das sich nach dem selektiven Auftrag durch Trocknen/Abdampfen verfestigt. Die flüssige Phase enthält Wasser oder eine Kombination von Wasser und einem Lösungsmittel. Derartige Suspensionen werden im folgenden auch als Schlicker bezeichnet.

Die Suspension weist einen Gehalt an Zirkonoxid von 68 bis 88 Gew.-%, bevorzugt 70 bis 86 Gew.-% und besonders bevorzugt 75 bis 85 Gew.-% auf.

Das Zirkonoxid in der Suspension hat insbesondere eine Teilchengröße von 50 bis 250 nm, bevorzugt von 60 bis 250 nm und besonders bevorzugt 80 bis 250 nm, gemessen als d₅₀-Wert, bezogen auf das Volumen aller Teilchen. Die Bestimmung der Teilchengröße erfolgt insbesondere mit dem Verfahren der statischen Laserbeugung (SLS) nach ISO 13320:2009, z.B. unter Benutzung eines Partikelanalysators LA-960 der Firma Horiba, oder der dynamischen Lichtstreuung (DLS) nach ISO 22412:2017, z.B. unter Benutzung eines Partikelmessgeräts Nano-flex der Firma Colloid Metrix.

Die Primärpartikelgröße des Zirkonoxids liegt insbesondere im Bereich von 30 bis 100 nm und sie wird üblicherweise ebenfalls mit einem wie vorstehend beschriebenen Verfahren der dynamischen Lichtstreuung (DLS) oder mittels Rasterelektronenmikroskopie bestimmt.

Bei dem Zirkonoxid handelt es sich insbesondere um Zirkonoxid auf Basis von polykristallinem tetragonalem Zirkonoxid (TZP). Bevorzugt ist Zirkonoxid, das mit Y₂O₃, La₂O₃, CeO₂, MgO und/oder CaO stabilisiert ist und insbesondere mit 2 bis 14 Mol-%, vorzugsweise mit 2 bis 10 Mol-% und besonders bevorzugt 2 bis 8 Mol.-% dieser Oxide, bezogen auf den Gehalt an Zirkonoxid, stabilisiert ist.

Das Zirkonoxid kann auch eingefärbt sein. Die gewünschte Einfärbung wird dabei insbesondere erzielt, indem das Zirkonoxid mit einem oder mehreren färbenden Elementen versetzt wird. Die Zugabe von färbenden Elementen wird bisweilen auch als Dotierung bezeichnet und sie erfolgt üblicherweise während der Herstellung des Zirkonoxidpulvers durch Cofällung und anschließende Kalzinierung. Beispiele für geeignete färbende Elemente sind Fe, Mn, Cr, Ni, Co, Pr, Ce, Eu, Gd, Nd, Yb, Tb, Er und Bi.

Bei dem Zirkonoxid in der Suspension kann es sich auch um ein Gemisch von Zirkonoxidpulvern mit unterschiedlicher Zusammensetzung handeln, die insbesondere zu einer unterschiedlichen Färbung und/oder Transluzenz bei der schließlich erzeugten dentalen Restauration führt. Mithilfe eines Gemisches aus unterschiedlich gefärbten Zirkonoxidpulvern kann somit die gewünschte Farbe einfach und in gezielter Weise eingestellt werden. In gleicher Weise kann auch die Transluzenz des erzeugten Objekts durch Verwendung eines Gemisches von Zirkonoxidpulvern unterschiedlicher Transluzenz gezielt eingestellt werden. Der Grad der Transluzenz des erzeugten Objekts kann insbesondere durch den Gehalt an Yttriumoxid der verwendeten Zirkonoxidpulver gesteuert werden.

Bei der Suspension kann es sich auch um ein Gemisch von unterschiedlichen Suspensionen zum Beispiel mit unterschiedlich gefärbtem Zirkonoxid handeln.

Das Zirkonoxid liegt als Suspension in einem flüssigen Medium vor. Dieses flüssige Medium enthält Wasser und nicht mehr als 5 Gew.-%, bevorzugt nicht mehr als 3 Gew.-%, weiter bevorzugt nicht mehr als 2 Gew.-% und besonders bevorzugt nicht mehr als 1 Gew.-% organische Komponenten, bezogen auf die Menge an Feststoff in der Suspension.

In einer weiteren bevorzugten Ausführungsform enthält das flüssige Medium organische Komponenten in einer Menge von 0,05 bis 5 Gew.-%, insbesondere 0,1 bis 3 Gew.-%, besonders bevorzugt 0,1 bis 2 Gew.-% und besonders bevorzugt 0,1 bis 1 Gew.-%, bezogen auf die Menge an Feststoff in der Suspension.

Als organische Komponenten des Schlickers kommen insbesondere Dispergiermittel, Bindemittel, Mittel zur Einstellung des pH-Wertes, Stabilisierungsmittel und/oder Entschäumer infrage.

Das Dispergiermittel dient dazu, die Agglomeration von suspendierten Teilchen zu größeren Teilchen zu vermeiden. Die Menge an Dispergiermittel in dem flüssigen Medium beträgt insbesondere 0,01 bis 5 Gew.-%, bevorzugt 0,1 bis 2 Gew.-% und besonders bevorzugt 0,1 bis 1 % Gew.-%, bezogen auf die Menge an Feststoff in der Suspension.

Bevorzugte Dispergiermittel für den Schlicker sind Aminoalkohole, wie Ethanolamin, Carbonsäuren, wie Maleinsäure und Citronensäure, und Carbonsäuresalze, sowie Mischungen dieser Dispergiermittel. Der Schlicker enthält vorzugsweise mindestens ein Dispergiermittel, besonders bevorzugt mindestens eine Verbindung ausgewählt aus Ethanolamin, Citronensäure und Citronensäuresalz.

Das Bindemittel des Schlickers fördert den Zusammenhalt von Teilchen in dem nach Schritt (4) vorliegenden Rohling. Die Menge an Bindemittel in dem flüssigen Medium des Schlickers beträgt insbesondere 0,01 bis 5 Gew.-%, bevorzugt 0,01 bis 3 Gew.- und besonders bevorzugt 0,01 bis 2 Gew.-%, bezogen auf die Menge an Feststoff in der Suspension.

Beispiele für geeignete Schlicker-Bindemittel sind Methylcellulose, Natriumcarboxymethylcellulose, Stärken, Dextrine, Natriumalginat, Ammoniumalginat, Polyethylenglykole, Polyvinylbutyral, Acrylatpolymere, Polyethylenimin, Polyvinylalkohol und Polyvinylpyrrolidon.

Bevorzugte Schlicker-Bindemittel sind Polyvinylalkohol, Polyvinylacetat, Polyvinylpyrrolidon, Polyacrylsäure, Copolymere von Acrylsäureester und Acrylsäure, Polyethylacrylat, Polymethacrylsäure, Polymethylmethacrylat, Ammoniumpolyacrylat, Ammoniumpolymethacrylat, Polyethylenglykol und feste Copolymere aus Ethylenglykol und Propylenglykol.

Als Mittel zur Einstellung des pH-Wertes und als Stabilisierungsmittel kommen insbesondere Säuren und Basen infrage, wie Carbonsäuren, z.B. 2-(2-Methoxyethoxy)essigsäure und 2-[2-(2-Methoxyethoxy)ethoxy]essigsäure, anorganische Säuren, z.B. Salzsäure und Salpetersäure, sowie Ammoniumhydroxid und Tetramethylammoniumhydroxid. Es ist bevorzugt, dass das flüssige Medium Tetramethylammoniumhydroxid enthält.

Der Entschäumer dient der Vermeidung von Luftblasen in der Suspension. Er wird typischerweise in einer Menge von 0,001 bis 1 Gew.-%, vorzugsweise 0,001 bis 0,5 Gew.-% und besonders bevorzugt 0,001 bis 0,1 Gew.-%, bezogen auf die Menge an Feststoff in der Suspension, in dem flüssigen Medium verwendet. Beispiele für geeignete Entschäumer sind Paraffine, Siliconöle, Alkylpolysiloxane, höhere Alkohole und insbesondere Alkylpolyalkylenglykolether.

Aufgrund des geringen Anteils an organischen Komponenten können diese auch innerhalb kurzer Zeit aus dem Rohling ausgebrannt werden.

Zur Erzeugung der Suspension wird typischerweise das Zirkonoxid in Pulverform mit dem flüssigen Medium innig vermischt. Dabei können auch Gemische von zum Beispiel unterschiedlich gefärbtem Zirkonoxid verwendet werden. Bei dieser Vermischung werden üblicherweise auch vorhandene Agglomerate aufgebrochen und es kann auch ein Mahlen des eingesetzten Zirkonoxids erfolgen, um die gewünschte Teilchengröße zu erzeugen. Das Vermischen von Zirkonoxid und flüssigem Medium kann daher zum Beispiel vorteilhaft in Rührwerkskugelmühlen durchgeführt werden.

Als Baumaterialien eignen sich weiterhin thermoplastische Materialien, die nach dem selektiven Auftrag durch Abkühlung erstarren und zusätzlich reaktiv verfestig werden können. Bevorzugte Materialien diese Art werden in EP 2 233 449 A1 und EP 3 147 707 A1 im Einzelnen beschrieben.

Bevorzugt sind außerdem die in EP 2 151 214 B1 beschriebenen Schlicker. Diese enthalten oberflächenmodifizierte Keramik- und/oder Glaskeramikpartikel. Bevorzugt sind sinterbare Glaskeramikpartikel auf Basis Leucit- oder Lithiumdisilikatverstärkten Gläsern und/ oder Keramikpartikel auf der Basis von ZrO₂ oder Al₂O₃, vorzugsweise reinem ZrO₂ oder reinem Al₂O₃, Partikel auf der Basis von mit HfO₂, CaO, Y₂O₃, CeO₂ und/oder MgO stabilisiertem ZrO₂, Partikel auf der Basis von anderen Metalloxiden sowie keramischen Kompositmaterialien, die aus mehreren Oxiden hergestellt werden und somit aus unterschiedlichen kristalline Oxidphasen aufgebaut sind, vorzugsweise ZrO₂-Al₂O₃, insbesondere reinem ZrO₂-Al₂O₃ oder mit HfO₂, CaO,Y₂O₃, CeO₂ und/oder MgO stabilisiertem ZrO₂-Al₂O₃.

Diese Schlicker enthalten vorzugsweise eine farbgebende Komponente. Als farbgebende Komponente sind Übergangsmetallverbindungen bevorzugt, vor allem Acetylacetonate oder Carbonsäuresalze der Elemente Eisen, Cer, Praseodym, Terbium, Lanthan, Wolfram, Osmium, Terbium und Mangan. Bevorzugt sind die Salze der Carbonsäuren Essig-, Propion-, Butter-, 2-Ethylhexylcarbon-, Stearin- und Palmitinsäure. Besonders bevorzugt sind die entsprechenden Fe-, Pr-, Mn- und Tb-Verbindungen, wie z.B. Eisen(III)-acetat oder -acetylacetonat, Mangan(III)-acetat oder -acetylacetonat, Praseodym (III)-acetat oder -acetylacetonat oder Terbium(III)-acetat oder -acetylacetonat sowie die entsprechenden Carbonsäuresalze.

Die farbgebende Komponente ist für die Farbe der Keramik nach dem Entbindern und Sintern verantwortlich. Wenn sie während des Druckprozesses Laserenergie absorbiert und in Wärme transformiert, ist sie grundsätzlich als Energietransformationskomponente geeignet. Allerdings ist ihre Menge an die Farbgebung angepasst und daher in der Regel zu gering, um einen zum Drucken ausreichenden Energietransfer zu bewirken. Deshalb ist in den meisten Fällen eine zusätzliche Energietransferkomponente erforderlich. Diese wird beim Entbindern und Sintern ausgebrannt und hat daher keinen Einfluss auf die Farbe der gesinterten Keramik.

Die Baumaterialien enthalten in allen Fällen mindestens eine Volumenausdehnungskomponente, die das Verdrucken mittels LIFT ermöglicht.

Die beschriebenen Baumaterialien eignen sich besonders zur Kombination mit den erfindungsgemäß verwendeten Stützmaterialien.

Nach der Verfestigung muss das Stützmaterial aus dem Formkörper rückstandsfrei entfernt werden, ohne dabei den Formkörper zu beschädigen. Je nach eingesetztem Baumaterial können hier unterschiedliche Verfahren wie das Lösen in einem geeigneten Lösungsmittel und/oder das Schmelzen zum Einsatz kommen.

Zum Entfernen des Stützmaterials bei keramischen Baumaterialien wird vorzugsweise der Grünkörper mit dem umgebenen Stützmaterial direkt in den Ofen geben, wo das Stützmaterial entweder schmilzt und/oder sich thermisch zersetzt und sich dadurch vom keramischen Grünkörper trennt. Beim Entbindern und Sintern ist darauf zu achten, dass das Stützmaterial restlos verbrennt und die Zersetzungsgase der organischen Phase des keramischen Grünkörpers ungehindert entweichen können. Dies kann z.B. dadurch erreicht werden, dass das Stützmaterial bei niedrigeren Temperaturen schmilzt oder sich zersetzt als die übrigen organischen Materialien im keramischen Grünkörper.

Alternativ kann das Stützmaterial nach dem Drucken und vor dem Entbindern/Sintern vom keramischen Grünkörper entfernt werden, wie im Folgenden für organische Materialien beschrieben.

Wenn die gedruckten Bauteile eine "bleibende", d.h. nicht auszubrennende organische Komponente im Baumaterial enthalten (z.B. Composite, Prothesenbasis, Zahnmaterialien, Hilfsmaterialien wie Modellmaterialien, ausbrennbare Materialien für die Lost-Wax Technik, Abformlöffel, Aufbissschienen, Bohrschablonen) kann das Stützmaterial nicht durch Verbrennen entfernt werden und muss deshalb auch nicht komplett rückstandsfrei verbrennbar sein. In diesen Fällen wird das Stützmaterial vorzugsweise durch Schmelzen oder Auflösen in einem Lösungsmittel oder Wasser, ggf. bei erhöhter Temperatur, entfernt. Außerdem kann es auf mechanische Weise entfernt werden, z.B. maschinell durch Trowalisieren, oder manuell durch Ultraschallreinigung oder durch Abspritzen/Abwaschen. Kombinationen der genannten Maßnahmen kommen ebenfalls in Betracht. Beispielsweise kann das Stützmaterial durch Quellen in einem Lösungsmittel erweicht und dann maschinell oder manuell mechanisch entfernt werden. In einer besonders bevorzugten Ausführungsform wird das Stützmaterial geschmolzen und anhaftende Stützmaterialreste dann durch ein Lösungsmittelbad entfernt. Durch die beschriebenen Maßnahmen wird das Objekt gleichzeitig gereinigt.

Im Folgenden wird die Erfindung anhand von Ausführungsbeispielen näher erläutert

### Ausführungsbeispiele

### Beispiele 1 bis 7: Herstellung von Stützmaterialien

Durch Mischen der Komponenten wurden die in der folgenden Tabellen angegebenen Zusammensetzungen hergestellt (alle Angaben in Gew.-%):

| **Nr.** | **1** | **2** | **3** |
|---|---|---|---|
| Deionisiertes Wasser | 49.80% | 29.90% | 40% |
| Polyethylene Glycol 2000g/mol | 50% | 50% | 35% |
| Polyethylene Glycol 200 g/mol | - | 20% | 10 |
| Safranin O (CAS 477-73-6) | 0.20% | 0.10% | 0.05 |
| Aquamatte 22 (oxidierte PE-Wax Micropartikel mit 6-8 Micrometer Partikelgröße und Schmelzpunkt 138°C) | - | - | 15% |

| **Nr.** | **4** | **5** | **6** | **7** |
|---|---|---|---|---|
| n-Octanol | 10% | 10% | 15% | 10% |
| Parrafin Wachs (Schmelzpunk 42-44°C) | 89.90% | - | 74.90% | - |
| Parrafin Wachs (Schmelzpunk 50-52°C) | - | 89.90% | - | - |
| Sudan Schwarz B (CAS 4197-25-5) | 0.10% | 0.10% | 0.10% | 0.2% |
| 1-Octadecanol | - | - | - | 89.8 |
| Orgasol 2001 UD NAT 2 (Polyamid 12 Micropartikel mit 10 Micrometer Partikelgrösse) | - | - | 10% | - |

### Beispiel 8: Herstellung von Bauteilen durch LIFT-Prozess

Die Materialien 1-3 wurden separat mit einem Doktorblade auf eine plasmabehandelte 50 µm dicke PET-Folie aufgerakelt. Die Materialien 4-7 wurden separat mit einer auf 60°C erwärmten Doppelschlitzdüse auf den Träger (PET-Folie) aufgebracht und erstarrten dort wieder. Die Trägerfilmdicke betrug in allen Fällen 30 µm.

Die Trägersubstrate wurden in den Arbeitsbereich des Lasers transferiert und dort innerhalb von maximal 5 Sekunden verarbeitet. Als Laser wurde ein Neodym-YAG Laser mit einer Wellenlänge von 1064 nm verwendet. Die beschichteten Träger wurden von hinten durch das Trägersubstrat hindurch mit einem Laserpuls von 100 ns mit einer Leistung von 12 mW beschossen, wobei der Laserstrahl auf einen Punkt mit einem Durchmesser von 50 µm fokussiert war. Als Empfängersubstrat wurden plasmabehandelte PET-Folien mit einer Dicke von 50 µm verwendet. Die Tropfen wurden mit einer Überlappung von 0-30µm nebeneinander auf dem Empfängersubstrat abgeschieden, während der Materialfilm auf dem Trägersubstrat kontinuierlich erneuert wurde. Der Abstand zwischen Trägersubstrat (Tropfengenerierungsort, d.h. der Stelle an der der Laser die Tropfen aus dem Materialfilm auf dem Trägersubstrat herausschießt) und Empfängersubstrat betrug 300 µm.

Auf dem Empfängersubstrat wurden die Materialien 1-3 mit einem konstanten Luftfluss über das Empfängersubstrat innerhalb 10 Sekunden soweit getrocknet, dass sie erstarren. Die Materialien 4-7 erstarrten durch abkühlen, und die Volumenausdehnungskomponente verdampfte langsam.

Das Stützmaterial wurde ortsselektiv auf das Empfängersubstrat aufgetragen. In die nicht mit Stützmaterial bedrucken Freiräume wurde das Baumaterial auf die beschriebene Weise aufgebracht.

### Beispiel 9: Herstellung von keramischen Bauteilen durch LIFT-Prozess

Durch Mischen der Komponenten in einer Rührwerkskugelmühle (MicroCer-Rührwerkskugelmühle, Firma Netzsch) wurde der in der folgenden Tabellen angegebene wässrige ZrO₂-Schlicker hergestellt.

| **Anteil *[Gew. -%]*** | ***Komponente*** |
|---|---|
| 80, 95% | ZrO₂, stabilisiert mit 3 mol.-% Y₂O₃ (TZ-PX-245)¹⁾ |
| 0,05% | 2-[2-(2-Methoxyethoxy)ethoxy]essigsäure (TODA) |
| 5% | PEG 10.000 |
| 0,1% | Safranin O (CAS 477-73-6) |
| 2% | Glycerin |
| 11,9% | deionisiertes Wasser (Dispergiermedium) |

| | |
|---|---|
| ¹⁾ Primärpartikelgröße 40 nm | |

Das Material wurde auf die in Beispiel 8 beschriebene Weise verdruckt. Die Verfestigung des Baumaterials erfolgte durch Trocknen. Es wurden jeweils 5 Schichten Stützmaterial bzw. Baumaterial abgeschieden. Dann wurde das Bauteil mit einer Edelstahlwalze zur Anpassung der Schichthöhe geglättet. Nach dem Glätten wurden weitere 5 Schichten aufgebracht und der Glättungsschritt wiederholt. Dieser Vorgang wurde bis zum Abschluss des Druckvorgangs wiederholt.

Nach Abschluss des Druckvorgangs wurden die gedruckten Objekte, die vom Stützmaterial vollständig umgeben waren, in einen Sinterofen gegeben, dort mit einer Heizrate von +1°C/min von Raumtemperatur auf 500°C erwärmt. Während des Aufheizens schmolz das Stützmaterial und floss aus den gedruckten Objekten heraus. Die Objekte konnten sich anschließend ohne Wiederstand beim Entbindern und Sintern zuerst leicht ausdehnen und dann zusammenziehen. Anfällig anhaftende Stützmaterialreste und das Empfängersubstrat (PET-Folie) zersetzten sich im weiteren Aufheizprozess rückstandsfrei. Danach waren die Grünkörper vollständig entbindert und konnten dichtgesintert werden, indem sie mit einer Heizrate von +10°C/min auf 1500°C erhitzt und dann bei 1500°C für 1 Stunde gesintert wurden.

Nach Abkühlen auf Raumtemperatur erhielt man 3D Druckteile aus Keramik. Die Versuche zeigen, dass sich das erfindungsgemäße Verfahren besonders zur Herstellung dentaler Restaurationen eignen, die im Aussehen sehr weitgehend dem natürlichen Zahn entsprechen. Die zahnkronenförmigen, keramischen Bauteile wiesen keine Entbinderungsrisse auf, waren optische homogen und hatten eine Dichte von mehr als 99,5% der theoretischen Dichte. Die Dichte wurde nach Archimedes-Methode gemessen.

## Patentansprüche

1. Verfahren zur generativen Herstellung eines dreidimensionalen Objekts, das die folgenden Schritte umfasst:
(1) Flächiges Aufbringen eines Stütz-/Baumaterials auf einen Träger in definierter Schichtdicke,
(2) Transfer eines Anteils des Stütz-/Baumaterials vom Trägersubstrat (Donor) auf ein Empfängersubstrat (Akzeptor) durch den lokalen, ortsselektiven Eintrag eines Energieimpulses,
(3) Verfestigen des Stütz-/Baumaterials auf dem Empfängersubstrat,
(4) Wiederholen der Schritte (1)-(3) bis das gewünschte Objekt erstellt ist,
(5) Entfernen des Stützmaterials und optionales Reinigen des Objekts,
**dadurch gekennzeichnet, dass** man mindestens ein Stützmaterial, das
(a) 0,05 bis 30 Gew.-% mindestens eines anorganischen oder organischen Farbstoffs und/oder eines Pigments als Energietransformationskomponente,
(b) 5 bis 60 Gew.-% mindestens eines Stoffs mit einem Siedepunkt von 80 bis 280°C, der aus Wasser, 1,6-Hexandiol, 1,8-Octandiol, 1-Octanol, Propylenglycoldiacetat, Ethylenglycoldiacetat, Triethyl-2-acetyl-citrate, Triethylcictrat, Adibinsäuredimethylester, Adipinsäurediethylester, Triethylenglycol, Glutarsäurediethylester, Glutarsäuredimethylester, Diethylsuccinate, Essigsäurebutylester oder Essigsäure-n-hexylester ausgewählt ist, als Volumenausdehnungskomponente und
(c) 35 bis 94,95 Gew.-% mindestens eines Polymers, Wachses und/oder ein nichtionischen Tensids als Bindemittel enthält, wobei das Polymer, Wachs und/oder nichtionische Tensid bei < 40°C fest ist, jeweils bezogen auf die Gesamtmasse des Materials, und
das eine Viskosität bei 25°C von 0,2 Pas bis 1000 Pas, gemessen mit einem Anton Paar Rheometer mit CP50-1 Konus-Platte-Messmittel bei einer Scherrate von 100/s, und eine Oberflächenspannung bei 25°C von 20 bis 150 mN/m aufweist, bestimmt gemäß DIN 55660-1 bis -7 oder DIN 53914,
und mindestens ein Baumaterial einsetzt, das entweder eine Zusammensetzung ist, die
(α) 20 bis 98 Gew.-% mindestens eines polymerisierbaren Bindemittels,
(β) 0,5 bis 15 Gew.-% mindestens eines flüssigen, radikalisch polymerisierbaren Monomers mit einem Siedepunkt von weniger als 200°C als Volumenausdehnungskomponente,
(γ) 0,05 bis 5 Gew.-% mindestens eines Initiators für die Polymerisation, und
(δ) 0 bis 5 Gew.-% mindestens eines anorganischen oder organischen Farbstoffs und/oder eines Pigments als Energietransformationskomponente enthält,
oder eine Suspension von Zirkonoxid in einem flüssigen Medium ist, die 68 bis 88 Gew.-% Zirkonoxid enthält, und wobei das flüssige Medium Wasser und nicht mehr als 5 Gew.-% organische Komponenten, bezogen auf die Menge an Feststoff in der Suspension, enthält.

2. Verfahren nach Anspruch 1, bei dem man das Objekt im Anschluss an Schritt (3) glättet, vorzugsweise mit einer Walze, Klinge, Fräse und/oder einem Abstreifer.

3. Verfahren nach einem der Ansprüche 1 bis 2, bei dem man das Objekt aus Schritt (5) in einem weiteren Schritt (6) nachvergütet.

4. Verfahren nach einem der Ansprüche 1 bis 3, bei dem man das Objekt aus Schritt (5) oder Schritt (6) in Schritt (7) entbindert und/oder sintert.

5. Verfahren nach einem der Ansprüche 1 bis 4, bei dem man in Schritt (2) eine oder mehrere Schichten Stützmaterial auf das Empfängersubstrat aufbringt und man dann auf oder in die zuvor abgeschiedenen Schichten des Stützmaterials ein Baumaterial abscheidet/aufträgt.

6. Verfahren nach einem der Ansprüche 1 bis 5, bei dem man als Träger in Schritt (1) und oder Empfängersubstrat in Schritt (2) eine Polymerfolie, einen Glasträger, einen Träger aus einem nicht-metallischen, anorganischen, nicht-porösen Werkstoff, einen metallischen Träger oder einen keramischen Träger einsetzt.

7. Verfahren nach einem der Ansprüche 1 bis 6, bei dem der Energieeintrag in Schritt (2) über die dem Stützmaterial abgewandte Seite des Trägersubstrats erfolgt.

8. Verfahren nach einem der Ansprüche 1 bis 7, bei dem man als Baumaterial
eine Zusammensetzung, die
(α) ein radikalisch polymerisierbares Bindemittel,
(β) mindestens eine Volumenausdehnungskomponente,
(γ) mindestens einen Initiator für die radikalische Polymerisation, bevorzugt einen Photoinitiator, und
(δ) mindestens eine Energietransformationskomponente enthält,
oder
eine Suspension von Zirkonoxid in einem flüssigen Medium verwendet, die einen Gehalt an Zirkonoxid von 70 bis 86 Gew.-% und bevorzugt 75 bis 85 Gew.-% aufweist.

9. Verfahren nach einem der Ansprüche 1 bis 8, bei dem das Stützmaterial als Volumenausdehnungskomponente (b) einen Stoff mit einem Siedepunkt von 95 bis 200°C enthält.

10. Verfahren, nach einem der vorhergehenden Ansprüche, bei dem das Stützmaterial
0,05 bis 20 Gew-% Energietransformationskomponente (a),
8 bis 50 Gew-% Volumenausdehnungskomponente (b),
40 bis 90 Gew-% und ganz besonders bevorzugt 49 bis 90 Gew.-% Bindemittel (c) enthält, jeweils bezogen auf die Gesamtmasse des Materials.

11. Verfahren nach einem der vorhergehenden Ansprüche, bei dem der Energieimpuls durch einen Laser erzeugt wird.

## Claims

1. Process for the additive manufacture of a three-dimensional object, which comprises the following steps:
(1) laminar application of a support/construction material to a carrier in a defined layer thickness,
(2) transfer of a portion of the support/construction material from the carrier substrate (donor) onto a receiver substrate (acceptor) by the local, site-selective input of an energy pulse,
(3) solidification of the support/construction material on the receiver substrate,
(4) repetition of steps (1)-(3) until the desired object has been constructed,
(5) removal of the support material and optional cleaning of the object,
**characterized in that** at least one support material, which comprises
(a) 0.05 to 30 wt.-% of at least one inorganic or organic dye and/or pigment as energy transformation component,
(b) 5 to 60 wt.-% of at least one substance with a boiling point of 80 to 280°C, which is selected from water, 1,6-hexanediol, 1,8-octanediol, 1-octanol, propylene glycol diacetate, ethylene glycol diacetate, triethyl-2-acetyl citrate, triethyl citrate, adipic acid dimethyl ester, adipic acid diethyl ester, triethylene glycol, glutaric acid diethyl ester, glutaric acid dimethyl ester, diethyl succinate, acetic acid butyl ester, or acetic acid n-hexyl ester, as volume expansion component,
(c) 35 to 94.95 wt.-% of at least one polymer, wax, and/or non-ionic surfactant as a binder, wherein the polymer, wax and/or non-ionic surfactant is solid at < 40°C,
in each case relative to the total mass of the material, and
has a viscosity at 25°C of from 0.2 Pas to 1000 Pas, measured with an Anton Paar rheometer with CP50-1 cone-plate measuring equipment at a shear rate of 100/s, and a surface tension at 25°C of from 20 to 150 mN/m, measured according to DIN 55660-1 to -7 or DIN 53914,
and at least one construction material is used that is either a composition, which comprises
(α) 20 to 98 wt.% of at least one polymerizable binder,
(β) 0.5 to 15 wt.% of at least one liquid, radically polymerizable monomer with a boiling point of less than 200°C as volume expansion component,
(γ) 0.05 to 5 wt.% of at least one initiator for the polymerization, and
(δ) 0 to 5 wt.% of at least one inorganic or organic dye and/or pigment as energy transformation component,
or a suspension of zirconium oxide in a liquid medium which comprises 68 to 88 wt.-% of zirconium oxide, and wherein the liquid medium comprises water and not more than 5 wt.% of organic components, relative to the quantity of solid in the suspension.

2. Process according to claim 1, in which the object is smoothed following step (3), preferably with a roller, blade, burr and/or a wiper.

3. Process according to claim 1 or 2, in which the object from step (5) is post-cured in a further step (6).

4. Process according to any one of claims 1 to 3, in which the object from step (5) or step (6) is debinded and/or sintered in step (7).

5. Process according to any one of claims 1 to 4, in which, in step (2), one or more layers of support material are applied to the receiver substrate and then a construction material is deposited/applied onto or into the previously deposited layers of the support material.

6. Process according to any one of claims 1 to 5, in which a polymer film, a glass carrier, a carrier made of a non-metallic, inorganic, non-porous material, a metallic carrier, or a ceramic carrier is used as carrier in step (1) and/or receiver substrate in step (2).

7. Process according to any one of claims 1 to 6, in which the energy input in step (2) is effected via the side of the carrier substrate facing away from the support material.

8. Process according to any one of claims 1 to 7, in which a composition, which comprises
(α) at least one radically polymerizable binder,
(β) at least one volume expansion component,
(γ) at least one initiator for the radical polymerization, preferably a photoinitiator, and
(δ) at least one energy transformation component,
or
a suspension of zirconium oxide in a liquid medium which has a zirconium oxide content of from 70 to 86 wt.-%, preferably 75 to 85 wt.-%, is used as construction material.

9. Process according to any one of claims 1 to 8, wherein the support material comprises a substance with a boiling point of from 95 to 200°C as volume expansion component (b) .

10. Process, according to any one of the preceding claims, wherein the support material comprises
0.05 to 20 wt.-% of energy transformation component (a),
8 to 50 wt.-% of volume expansion component (b),
40 to 90 wt.-%, particularly preferably 49 to 90 wt.-%, of binder (c), in each case relative to the total mass of the material.

11. Process according to any one of the preceding claims, wherein the energy pulse is generated by a laser.

## Revendications

1. Procédé pour la fabrication additive d'un objet tridimensionnel, qui comprend les étapes suivantes :
(1) application à plat d'un matériau de construction/soutien sur un support, en épaisseur de couche définie,
(2) transfert d'une partie du matériau de construction/soutien du substrat porteur (donneur) à un substrat receveur (accepteur) par l'apport local, localement sélectif, d'une impulsion d'énergie,
(3) consolidation du matériau de construction/soutien sur le substrat récepteur,
(4) répétition des étapes (1) à (3) jusqu'à ce que l'objet recherché soit créé,
(5) élimination du matériau de soutien et nettoyage optionnel de l'objet,
**caractérisé en ce qu'**on utilise au moins un matériau de soutien qui contient
(a) 0,05 à 30 % en poids d'au moins un colorant organique ou inorganique et/ou d'un pigment en tant que composant de transformation d'énergie,
(b) 5 à 60 % en poids d'au moins une substance ayant un point d'ébullition de 80 à 280 °C, qui est choisie parmi l'eau, le 1,6-hexanediol, le 1,8-octanediol, le 1-octanol, le diacétate de propylèneglycol, le diacétate d'éthylèneglycol, le 2-acétyl-citrate de triéthyle, le citrate de triéthyle, l'ester diméthylique d'acide adipique, l'ester diéthylique d'acide adipique, le triéthylèneglycol, l'ester diéthylique d'acide glutarique, l'ester diméthylique d'acide glutarique, le succinate de diéthyle, l'acétate de butyle ou l'acétate de n-hexyle, en tant que composant d'expansion volumique, et
(c) 35 à 94,95 % en poids d'au moins un polymère, une cire et/ou un tensioactif non ionique en tant que liant, le polymère, la cire et/ou le tensioactif non ionique étant solides à < 40 °C, chaque fois par rapport à la masse totale du matériau, et
qui présente une viscosité à 25 °C de 0,2 Pa·s à 1 000 Pa·s, mesurée à l'aide d'un rhéomètre Anton Paar muni d'un dispositif de mesure à cône-plateau CP50-1 à une vitesse de cisaillement de 100/s, et une tension superficielle à 25 °C de 20 à 150 mN/m, déterminée selon DIN 55660-1 à -7 ou DIN 53914,
et au moins un matériau de construction qui est soit une composition qui contient
(α) 20 à 98 % en poids d'au moins un liant polymérisable,
(β) 0,5 à 15 % en poids d'au moins un monomère liquide, polymérisable par voie radicalaire, ayant un point d'ébullition inférieur à 200 °C, en tant que composant d'expansion volumique,
(γ) 0,05 à 5 % en poids d'au moins un amorceur pour la polymérisation, et
(δ) 0 à 5 % en poids d'au moins un colorant organique ou inorganique et/ou d'un pigment, en tant que composant de transformation d'énergie,
soit une suspension d'oxyde de zirconium dans un milieu liquide qui contient 68 à 88 % en poids d'oxyde de zirconium, et le milieu liquide contenant de l'eau et ne contenant pas plus de 5 % en poids de composants organiques, par rapport à la quantité de matière solide dans la suspension.

2. Procédé selon la revendication 1, dans lequel on lisse l'objet à la suite de l'étape (3), de préférence à l'aide d'un rouleau, d'une lame, d'une fraise et/ou d'une racle.

3. Procédé selon l'une quelconque des revendications 1 et 2, dans lequel, dans une étape supplémentaire (6), on soumet à un post-traitement l'objet issu de l'étape (5).

4. Procédé selon l'une quelconque des revendications 1 à 3, dans lequel, dans l'étape (7), on élimine le liant de l'objet issu de l'étape (5) ou de l'étape (6) et/ou on le fritte.

5. Procédé selon l'une quelconque des revendications 1 à 4, dans lequel, dans l'étape (2), on applique une ou plusieurs couches de matériau de soutien sur le substrat récepteur, et on dépose/applique ensuite un matériau de construction sur ou dans les couches du matériau de soutien déposées précédemment.

6. Procédé selon l'une quelconque des revendications 1 à 5, dans lequel on utilise comme support dans l'étape (1) et/ou comme substrat récepteur dans l'étape (2) un film polymère, un support en verre, un support constitué d'un matériau non métallique, inorganique, non poreux, un support métallique ou un support céramique.

7. Procédé selon l'une quelconque des revendications 1 à 6, dans lequel l'apport d'énergie dans l'étape (2) s'effectue via la face du substrat porteur opposée au matériau de soutien.

8. Procédé selon l'une quelconque des revendications 1 à 7, dans lequel on utilise comme matériau de construction
une composition qui contient
(α) un liant polymérisable par voie radicalaire,
(β) au moins un composant d'expansion volumique,
(γ) au moins un amorceur pour la polymérisation radicalaire, de préférence un photoamorceur, et
(δ) au moins un composant de transformation d'énergie,
ou
une suspension d'oxyde de zirconium dans un milieu liquide, qui présente une teneur en oxyde de zirconium de 70 à 86 % en poids et de préférence 75 à 85 % en poids.

9. Procédé selon l'une quelconque des revendications 1 à 8, dans lequel le matériau de soutien contient, en tant que composant d'expansion volumique (b), une substance ayant un point d'ébullition de 95 à 200 °C.

10. Procédé selon l'une quelconque des revendications précédentes, dans lequel le matériau de soutien contient
0,05 à 20 % en poids de composant de transformation d'énergie (a),
8 à 50 % en poids de composant d'expansion volumique (b),
40 à 90 % en poids et de façon tout particulièrement préférée 49 à 90 % en poids de liant (c), chaque fois par rapport à la masse totale du matériau.

11. Procédé selon l'une quelconque des revendications précédentes, dans lequel l'impulsion d'énergie est générée par un laser.
